# EUROPÄISCHE PATENTSCHRIFT

(11) **EP 3 150 521 B1**
(45) Veröffentlichungstag und Bekanntmachung des Hinweises auf die Patenterteilung: **26.10.2022**
(21) Anmeldenummer: 16182556.7
(22) Anmeldetag: 03.08.2016
(51) Int. Cl.: B65G 47/08

(54) **VORRICHTUNG ZUM GRUPPIEREN VON STÜCKGUT UND VERFAHREN ZUM FORMATWECHSEL EINER SOLCHEN VORRICHTUNG**
ARTICLES GROUPING DEVICE AND METHOD FOR CHANGING THE FORMAT OF SUCH A DEVICE
DISPOSITIF DE GROUPEMENT D'ARTICLES ET PROCEDE DE CHANGEMENT DE FORMAT D'UN TEL DISPOSITIF

(30) Priorität: 31.08.2015 DE 102015114535; 01.09.2015 DE 202015104636 U; 04.12.2015 DE 102015121131
(43) Veröffentlichungstag der Anmeldung: 05.04.2017
(73) Patentinhaber: KRONES Aktiengesellschaft, 93073 Neutraubling (DE)
(72) Erfinder: ASTNER, Michael, 93073 Neutraubling (DE)
(74) Vertreter: Benninger, Johannes

(56) Entgegenhaltungen:
- EP-B1- 2 357 145
- DE-A1- 3 614 559
- DE-A1- 4 025 706
- DE-B- 1 229 899
- DE-U1-202010 007 012
- FR-A1- 2 603 260
- US-A- 4 878 337
- US-A1- 2007 029 162

## Beschreibung

Die vorliegende Erfindung betrifft eine Vorrichtung zum Gruppieren von Stückgut nach dem Oberbegriff des unabhängigen Anspruchs 1, sowie ein Verfahren zum Formatwechsel innerhalb einer solchen Vorrichtung.

Vorrichtungen zum Handhaben von Stückgut werden oftmals in Produktionsanlagen bei der Massenproduktion von Artikeln oder Stückgütern eingesetzt, bei der die Artikel oder Stückgüter zwischen verschiedenen Behandlungs- oder Handhabungsmaschinen in einem mehr oder weniger geschlossenen Produktstrom transportiert werden. Dieser Produktstrom muss je nach Kapazität und Aufbau der im Produktstrom nachgeordneten Behandlungs- und/oder Handhabungsmaschinen in unterschiedliche, voneinander beabstandete Teilgruppen eingeteilt werden. So ist es bspw. in der Getränkeindustrie notwendig, einen Massenstrom von ankommenden Getränkebehältern wie z.B. Flaschen oder Dosen, vor einer Verpackungsmaschine in sinnvolle Einheiten zu gruppieren, um anschließend verkaufsgerechte Verpackungseinheiten bilden zu können. In diesem Fall bezeichnet man die Vorrichtungen insbesondere als Gruppiervorrichtung.

Alternativ kann eine solche Handhabungsvorrichtung auch dazu dienen, im Massenstrom ankommende Stückgüter für die weitere Verarbeitung zu vereinzeln und jeweils voneinander zu beabstanden.

Wenn im vorliegenden Zusammenhang von einer Gruppierung oder Vereinzelung von Artikeln, Stückgütern, Getränkebehältern o. dgl. die Rede ist, so ist damit in aller Regel das Herstellen von Lücken in einem ununterbrochenen Produktstrom bzw. Massenstrom gemeint. Nach der Gruppierung läuft der Produktstrom zwar weiter, doch sind die einzelnen Artikel oder Stückgüter in mehrere Gruppen von jeweils zwei, vier, sechs oder auch mehr nahe beieinander befindlichen Einzelgütern zusammengefasst, wobei zwischen benachbarten Gruppen jeweils ein Abstand bzw. eine Lücke ausgebildet ist. Nach der Vereinzelung läuft der Produktstrom zwar ebenfalls weiter, doch sind die Artikel oder Stückgüter jeweils vereinzelt und insbesondere voneinander in einem definierten Abstand beabstandet.

Die Anzahl der Artikel oder Stückgüter je Gruppe bzw. die Vereinzelung der Artikel oder Stückgüter richtet sich nach den Verpackungsanforderungen der jeweils im Produktionsprozess nachgeordneten Verpackungsmaschine. Die derart gruppierten Artikelzusammenstellungen können bspw. mit Hilfe einer Umverpackung zusammengefasst werden. So kann eine solche Artikelgruppe insbesondere mit einer Schrumpffolie umhüllt werden, die anschließend unter Wärmeeinwirkung auf die Artikelgruppe aufgeschrumpft wird, so dass ein sog. Gebinde, Foliengebinde oder Schrumpfgebinde entsteht. Alternativ kann vorgesehen sein, dass die gruppierten Artikel durch eine Kartonumverpackung zusammengefasst werden. Dazu wird die Artikelgruppe bspw. auf einen entsprechenden Kartonzuschnitt geschoben, dessen faltbare Kartonbögen, die seitlich oder zu allen Seiten über die Grundfläche der Artikelgruppe ragen, anschließend um die Artikelgruppe herum nach oben gefaltet werden. Eine weitere Möglichkeit einer Umverpackung von gruppierten Artikeln wäre die Anordnung der Artikel auf einem so genannten Tray in Verbindung mit einer Schrumpffolienumverpackung. Darüber hinaus können die Artikel zur Herstellung von Umreifungsgebinden mit einer horizontalen Umreifung oder mit zwei oder mehr solcher Umreifungen umhüllt und aneinander gespannt werden.

Die vereinzelten Artikel können bspw. Vorrichtungen zugeführt werden, die aus unterschiedlichen Artikeln Mischgebinde herstellen o.ä.

Aus dem Stand der Technik sind unterschiedliche Gruppierverfahren für derartige Produktströme bekannt. So offenbart bspw. die DE 31 44 449 A1 eine Gruppiervorrichtung mit Einteilfingern, die auf Traversen montiert sind und von unten in einen geschlossenen Produktstrom eingreifen, um diesen aufgrund unterschiedlicher Geschwindigkeiten der Förderbahn für die Produkte und der Traversen mit Lücken zu versehen und dadurch zu gruppieren. Die Traversen laufen dabei in einer geschlossenen Umlaufbahn um, die sich in einer Ebene befindet, die senkrecht auf der Transportebene steht. Allerdings sind bei derartigen Gruppiervorrichtungen keine schnellen Anpassungen auf unterschiedliche Größen der zu gruppierenden Produktgruppen möglich. Soll dies erfolgen oder soll die Anlage auf andere Artikelgrößen angepasst werden, so ist ein Anhalten der Maschine unumgänglich, um die notwendigen mechanischen Einstellungen und Anpassungen vornehmen zu können.

Grundsätzlich ist es von Vorteil, die Einteilung der Artikel oder Stückgüter des ankommenden Massenstroms in Gruppen bzw. die Vereinzelung der Artikel oder Stückgüter des ankommenden Massenstroms mithilfe von aus dem Stand der Technik bekannten und entsprechend beabstandeten Einteilerelementen vorzunehmen, insbesondere mithilfe von sog. Einteilerfingern. Diese sind üblicherweise in definierten Abständen jeweils an Einteilerleisten vormontiert. Bei einem Produktwechsel müssen die Einteilerleisten allerdings produktabhängig angepasst werden, was normalerweise den Werkzeugeinsatz erfordert und eine längere Umstellzeit beansprucht. So ist bspw. dann eine Anpassung notwendig, wenn auf andere Artikel mit einer unterschiedlichen Größe umgestellt werden soll. Auch dann ist eine Anpassung notwendig, wenn in einem neuen Gebindeformat eine andere Anzahl von Artikeln zusammengefasst werden soll. Dadurch ändern sich jeweils die Anforderung an die zu bildenden Gruppen bzw. an die jeweils gewünschten Abstände zwischen den Produktgruppen bzw. vereinzelten Artikeln oder Stückgütern. Auch bei einer Umstellung auf eine andere Umverpackung kann eine Anpassung der Handhabungsvorrichtung notwendig werden.

Die DE 21 10 198 A1 offenbart eine Gruppiervorrichtung für eine Anlage zum Ein- bzw. Auspacken von Gegenständen, die über auswechselbare Rückhalteglieder verfügt, welche aus mit einer gemeinsamen Platte fest verbundenen Anschlägen besteht. Die Führungsvorrichtung verfügt über einen Satz von Rückhaltegliedern, die auswechselbar sind und an den Durchmesser der Flaschen angepasst werden können. Die Rückhalteglieder sind jeweils über zwei Zapfen o. dgl. auf dem Unterteil abgestützt und mittels eines Verriegelungselementes, das aus einem zurückziehbaren in einem Zapfen verschiebbaren Finger besteht, an diesem Unterteil befestigt. Hierbei können die Position und/oder Anzahl der Rückhalteglieder an der Führungsvorrichtung verändert werden, was jedoch sehr zeit- und arbeitsintensiv ist.

Auch die EP 2 357 145 B1 offenbart eine Einteilerleiste mit verstellbaren Fingern, wodurch die Leiste für mehrere unterschiedliche Formate verwendet werden kann. Hierbei sind zwischen den Einteilerfingern Distanzelemente angeordnet, die die gewünschte Einstellbarkeit ermöglichen. Eine zeitaufwendige Umstellung mittels Werkzeug ist jedoch auch hier unumgänglich.

In der DE 10 2011 014 495 A1 wird eine Vorrichtung zum Gruppieren von Stückgut beschrieben, die einen optionalen Parksektor aufweisen kann, der bspw. genutzt werden kann, um die Einteileinrichtungen an unterschiedliche Einstellungen der Transportstrecke anzupassen. Weiterhin ist es möglich, diesen für eine Zwischenspeicherung von nicht benötigten Einteileinrichtungen zu verwenden.

Das Dokument US 4,878,337 offenbart eine Vorrichtung nach dem Oberbegriff des Anspruchs 1 und beschreibt eine endlos umlaufende Verpackungsmaschine mit zweiteilig ausgebildeten Einteilerleisten, die Einteilerfinger umfassen. Die Einteilerfinger sind auf einem ersten Bauteil ortsfest fixiert, das auf einem zweiten Bauteil angeordnet wird, welches über Rollen an zwei umlaufenden Ketten geführt ist.

Bei allen bekannten Einteil- und/oder Gruppiervorrichtungen ist es alternativ denkbar, die Einteilerleisten komplett auszutauschen und gegen neue, formatabhängige Einteilerleisten zu ersetzen. Für solche Austauschvorgänge muss jedoch die Anlage ebenfalls angehalten werden, um mittels geeigneten Werkzeuges die kompletten Einteilerleisten gegen solche mit passenden Abständen der Einteilfinger zueinander auszutauschen.

Nach dem derzeitigen Stand der Technik wird bei einem derartigen Formatwechsel die komplette Einteilerleiste entfernt und durch eine neue formatabhängige Einteilerleiste ersetzt. Dazu muss eine mit der Wartung befasste Person die Einteilerleiste per Kurbel o. dgl. Hilfseinrichtung in eine neutrale Stellung bringen und mindestens zwei Schraubverbindungen lösen, insbesondere auf einer für die Bedienperson zugänglichen Serviceseite, um die komplette Einteilerleiste entfernen zu können. Da die Bedienseite der Maschine und die Serviceseite normalerweise auf jeweils gegenüberliegenden Seiten der Gruppiervorrichtung angeordnet sind, muss der Bediener um die Maschine herumlaufen, um die zweite Schraubverbindung zu lösen. Entsprechend muss er beim Montieren der neuen Einteilerleiste vorgehen. Dies muss für einen kompletten Sortenwechsel entsprechend der Anzahl der innerhalb der Vorrichtung benötigten Einteilerleisten jeweils mehrfach durchgeführt werden. Da die Gruppiervorrichtung in der Regel Bestandteil einer deutlich größeren Gesamtanlage ist, kann es unter Umständen notwendig sein, dass der Bediener für den Wechsel der Einteilerleisten mehrfach um die gesamte Anlage herumlaufen muss, was die Zeit des Produktionsausfalls deutlich erhöht.

Für unterschiedliche Produkte, bzw. Artikel bzw. Stückgüter müssen somit jeweils eine Mehrzahl von komplett vormontierten und bestückten Einteilerleisten bereitgestellt werden.

Die DE 10 2004 042 474 A1 offenbart einen typischen Gruppiervorgang, bei dem mehrere Reihen von Stückgütern mittels von unten in den jeweiligen Stückgutstrom eingreifenden Einteilfingern in mehrere Gruppen von Stückgütern unter Ausbildung von dazwischen befindlichen Lücken eingeteilt werden.

Somit besteht ein vorrangiges Ziel der Erfindung darin, ein System zum Anpassen von Einteilerleisten von Vorrichtungen zum Handhaben von Stückgütern bei einem Produktwechsel bereitzustellen, wobei insbesondere der Arbeitsaufwand und der Zeitaufwand reduziert werden sollen, so dass eine Umstellung bei einem Produktwechsel schnell und einfach vorgenommen werden kann.

Dieses Ziel der Erfindung wird durch eine Vorrichtung zum Gruppieren von Stückgut und ein Verfahren zum Formatwechsel mit den Merkmalen der unabhängigen Ansprüche erreicht. Weitere vorteilhafte Ausgestaltungen werden durch die jeweiligen abhängigen Ansprüche beschrieben.

Zur Erreichung des genannten Ziels schlägt die Erfindung eine Vorrichtung zum Gruppieren von Stückgut vor, wobei das Stückgut in einem im Wesentlichen geschlossenen Strom auf einem Transportabschnitt entlang einer Transportebene zugeführt und durch mindestens einen von unten quer zur Transportebene in den Strom eintauchenden Einteilfinger längs zur Förderrichtung gruppiert wird. Der mindestens eine Einteilfinger ist mit einer sich quer zur Transportrichtung und unterhalb dieser erstreckenden Einteilerleiste verbunden oder dort montiert bzw. befestigt, die zumindest einseitig, vorzugsweise jedoch beidseitig der Transportebene an Fördermitteln verankert und dort an wenigstens einem durchgängigen Profilabschnitt oder an zumindest die Endabschnitte der Einteilerleiste haltenden Profilabschnitten form- und/oder kraftschlüssig fixiert ist, wobei die Fixierung der Einteilerleiste am wenigstens einen Profilabschnitt werkzeuglos lösbar und in definierter Einbauposition wieder herstellbar ist. Hierbei ist vorgesehen, dass die jeweilige Einteilerleiste durch Verschieben entlang ihrer Längserstreckungsrichtung aus dem form- und/oder kraftschlüssigen Kontakt mit dem wenigstens einen Profilabschnitt bringbar und von diesem trennbar ist.

Bei dieser erfindungsgemäßen Vorrichtung ist vorgesehen, dass der wenigstens eine Profilabschnitt mitsamt der in zumindest abschnittsweise formschlüssigen und/oder kraftschlüssigen Kontakt fixierbaren Einteilerleiste unterhalb der Transportebene in einer definierten Bewegungsbahn beweglich geführt ist.

Bei der erfindungsgemäßen Vorrichtung zum Handhaben von Stückgut kann es sich entweder um eine Vorrichtung handeln, bei der in einem Massenstrom ankommende Stückgüter in Gruppen aufgeteilt werden, wobei die Gruppen jeweils einen Abstand zueinander aufweisen. Weiterhin kann eine solche Vorrichtung verwendet werden, um in einem Massenstrom ankommende Stückgüter zu vereinzeln und in einem definierten Abstand zueinander anzuordnen. Eine solche Handhabungsvorrichtung ist insbesondere im Zulauf von Verpackungsvorrichtungen angeordnet, die das entsprechend gruppierte Stückgut mit einer Umverpackung zu einem Gebinde zusammenfassen. Als derartige Umverpackung dienen bspw. Schrumpffolie, Kartonumverpackungen, Trays, d.h. Unterlagen mit seitlichen Begrenzungen, Trays in Kombination mit Schrumpffolie o.ä. Eine solche Handhabungsvorrichtung kann auch im Zulauf einer Verpackungsmaschine angeordnet sein, die bspw. Mischgebinde herstellt. Hierzu müssen unterschiedliche jeweils im Massenstrom ankommende Stückgüter vereinzelt und anschließend durch eine weitere Gruppiereinrichtung zu Mischgebinden zusammengestellt werden.

Die erfindungsgemäße Vorrichtung zum Handhaben von Stückgut kann insbesondere ein integrierter Bestandteil einer Verpackungsanlage sein.

Die Vorrichtung zum Handhaben von Stückgut, im Folgenden auch Handhabungsvorrichtung genannt, umfasst ein Transportmittel für das Stückgut, das eine Transportebene für das Stückgut ausbildet, auf der das Stückgut in Transportrichtung bewegt wird. Die Handhabungsvorrichtung umfasst weiterhin mindestens einen von unten weitgehend senkrecht zur Transportebene einführbaren Einteilfinger, der mit einer Einteilerleiste verbunden ist, vorzugsweise jedoch mehrere Einteilfinger, die jeweils auf separaten Einteilerleisten montiert sind. Jede dieser Einteilerleisten ist unterhalb der Transportebene beweglich angeordnet und in einer definierten Bewegungsbahn geführt. Insbesondere kann vorgesehen sein, dass die Einteilerleiste in unterschiedlichen Abschnitten der Bewegungsbahn mit unterschiedlichen Geschwindigkeiten geführt wird. Die Bewegung der Einteilerleiste innerhalb der Bewegungsbahn kann also zeitlich veränderlich sein. Die Wegstrecke der Bewegungsbahn ist in der Regel räumlich fest vorgegeben, es sind aber auch Ausführungsformen denkbar, bei denen die Bewegungsbahn räumlich veränderlich ist und insbesondere bei einem Produktwechsel somit besonders gut auf das neue Produkt abgestimmt werden kann.

Das Stückgut wird in einer im Wesentlichen ununterbrochenen Abfolge von dem Transportmittel entlang der Transportebene zugeführt und durch den mindestens einen von unten weitgehend senkrecht zur Transportebene in den Stückgutstrom einführbaren Einteilfinger längs zur Transportrichtung des Transportmittels gruppiert oder vereinzelt.

Vorzugsweise ist eine Längsachse der Einteilerleiste innerhalb der Handhabungsvorrichtung senkrecht zu einer Transportrichtung des Transportmittels angeordnet und umfasst eine Mehrzahl von definiert beabstandeten Einteilfingern. Insbesondere ist die Einteilerleiste an mindestens einem umlaufenden Fördermittel angeordnet, das die Bewegungsbahn der Einteilerleiste vorgibt. Das Fördermittel ist bereichsweise unterhalb des Transportmittels für die Stückgüter angeordnet. Der mindestens eine Einteilfinger einer Einteilerleiste wird durch das Fördermittel gerade von unten her in Eingriff mit einem im Wesentlichen geschlossenen Stückgutstrom gebracht. Die Einteilerleiste wird durch das Fördermittel parallel zum Transportmittel für die Stückgüter mitgeführt, wobei die Geschwindigkeit des Fördermittels zumindest abschnittsweise relativ zum Transportmittel verlangsamt ist. Somit werden die den Einteilfingern nachlaufenden Stückgüter durch die Einteilfinger gebremst. Nach einer definierten Strecke werden die Einteilfinger durch Abtauchen nach unten wieder aus der Transportebene entfernt, wodurch die Stückgüter nunmehr wiederum mit der Transportgeschwindigkeit des Transportmittels weiterbewegt werden. Dies führt zu einer gewünschten Lückenbildung zwischen Stückgutgruppen mit jeweils einer definierten Anzahl von Stückgütern bzw. zwischen den vereinzelten Stückgütern. Durch Variation der Anzahl der verwendeten Einteilerleisten und der Differenzgeschwindigkeit zwischen dem Transportmittel der Stückgüter und dem Fördermittel der mindestens einen Einteilerleiste kann die Anzahl der jeweils als Gruppe abgetrennten Stückgüter oder die Vereinzelung der Stückgüter und die Größe der Lücke zwischen den Stückgutgruppen bzw. vereinzelten Stückgütern entsprechend eingestellt werden. Insbesondere können die Stückgutgruppen bzw. vereinzelte Stückgüter somit gemäß den Anforderungen einer nachgeordneten Verpackungsmaschine ausgebildet werden.

Die Einteilerleiste ist zumindest zweiteilig aufgebaut und umfasst ein umlaufend geführtes Profilelement oder einen Profilabschnitt und ein austauschbares Element, an dem der mindestens eine Einteilfinger angeordnet ist. Das Profilelement bzw. der Profilabschnitt und das austauschbare Element können zumindest weitgehend formschlüssig und vorzugsweise einseitig lösbar aneinander gekoppelt sein. Das Profilelement bzw. der Profilabschnitt kann alternativ auch als Aufnahmeelement bezeichnet werden, da es der Aufnahme des Austauschelementes innerhalb der Handhabungsvorrichtung dient.

Die wenigstens eine Einteilerleiste wird durch Verschieben, unter Aufhebung des Form- und/oder Kraftschlusses aus dem form- und/oder kraftschlüssigen Kontakt mit dem wenigstens einen Profilabschnitt gebracht und von diesem getrennt werden. Eine alternative, nicht zur Erfindung gehörende Ausführungsform kann vorgesehen sein, dass die jeweilige Einteilerleiste durch Verdrehen und/oder Abheben aus einem magnetischen Haftkontakt mit dem wenigstens einen Profilabschnitt bringbar und von diesem trennbar ist. Darüber hinaus kann gemäß einer weiteren alternativen oder ergänzenden Variante vorgesehen sein, dass die jeweilige Einteilerleiste in ihrer Betriebslage zur Fixierung einer definierten Einbauposition magnetisch und/oder mechanisch mit dem wenigstens einen Profilabschnitt verrastet ist.

Alle diese Varianten erlauben einen schnellen, einfachen und weitgehend werkzeuglos durchführbaren Austausch der Einteilerleisten an der erfindungsgemäßen Vorrichtung, wodurch Produktwechsel weitaus schneller durchführbar sind als bei den bisher bekannten Vorrichtungen.

Die Handhabungsvorrichtung kann wahlweise auf einer der Seite, insbesondere auf einer Seite parallel zu der Transportrichtung der Stückgüter auf dem Transportmittel, eine Serviceöffnung aufweisen. Das austauschbare Element der Einteilerleiste ist einseitig im Bereich der Serviceöffnung von dem Profilelement lösbar und kann einfach über die Serviceöffnung aus der Handhabungsvorrichtung entnommen werden. Insbesondere ist eine Verriegelung des Austauschelements am Profilelement nur an einer Seite der Vorrichtung vorgesehen.

Unter der einseitigen Entnahme bzw. dem einseitigen Lösen ist zu verstehen, dass ein Bediener oder bei Automatisierung ein Roboter o.ä. beim Lösen und der Entnahme jedes Austauschelements nicht an der gegenüberliegenden Seite der Handhabungsvorrichtung tätig werden muss.

So sieht die Vorrichtung gemäß einer bevorzugten Variante mindestens einen Zugangsbereich vor, der einer manuellen Handhabung der wenigstens einen werkzeuglos vom Profilabschnitt lösbaren Einteilerleiste und/oder einer Entnahme bzw. einem Austausch gegen eine weitere Einteilerleiste dient. Wie erwähnt, kann dieser mindestens eine Zugangsbereich durch eine Serviceöffnung gebildet sein oder mit einer Serviceöffnung ausgestattet sein, so dass die Einteilerleiste nach ihrer Trennung vom Profilabschnitt einseitig über den Zugangsbereich bzw. über die Serviceöffnung entnehmbar ist. Die Vorrichtung kann wahlweise wenigstens eine Wechselposition für die mindestens eine Einteilerleiste aufweisen, an der ein Austausch der Einteilerleiste unter Trennung vom Profilabschnitt vornehmbar ist, wobei die Wechselposition insbesondere mit dem Zugangsbereich bzw. mit der Serviceöffnung korrespondieren und/oder diesem/dieser zugeordnet sein kann.

Wie erwähnt, sind der Profilabschnitt und die Einteilerleiste an ihrem jeweils der Serviceöffnung zugewandten Ende über ein oder mehrere Befestigungsmittel lösbar miteinander verbunden. Besonders bevorzugt sind das ein oder mehrere Befestigungsmittel gut über die Serviceöffnung erreichbar und kann durch diese hindurch gelöst bzw. befestigt werden.

Um das Austauschelement der Einteilerleiste schnell und einfach an ein neues Produktformat anzupassen, ist ein sogenannter Wechselmodus vorgesehen, bei dem die Einteilerleiste innerhalb der Handhabungsvorrichtung in einer Wechselposition angeordnet ist. Insbesondere ist die Wechselposition der Serviceöffnung zugeordnet, so dass der Austausch über die Serviceöffnung stattfinden kann. Besonders bevorzugt ist vorgesehen, dass im Wechselmodus die Serviceöffnung in einer Flucht zur Längsachse der in der Wechselposition angeordneten Einteilerleiste angeordnet ist.

Nachdem das mindestens eine Befestigungsmittel an dem der Serviceöffnung zugewandten Ende der Einteilerleiste gelöst worden ist, kann der austauschbare Abschnitt der Einteilerleiste nunmehr einseitig über die Serviceöffnung bzw. über den Zugangsbereich entnommen werden.

Insbesondere wird das Austauschelement über die Serviceöffnung aus dem Profilelement bzw. dem Profilabschnitt entnommen bzw. herausgezogen. Anschließend wird ein anderes Austauschelement mit für das neue Produkt angepasster Anordnung der Einteilerfinger über die Serviceöffnung in das Profilelement eingeführt bzw. eingeschoben. Nachdem das Austauschelement über das mindestens eine Befestigungsmittel im Bereich der Serviceöffnung am Profilelement fixiert ist, kann mit der neuen Produktion gestartet werden.

In der Regel weist eine Handhabungsvorrichtung eine Mehrzahl von Einteilerleisten auf, die auf der definierten Bewegungsbahn für die mindestens eine Einteilerleiste entsprechend beabstandet angeordnet sind. Die Einteilerleisten werden nacheinander jeweils in die Wechselposition gebracht und das austauschbare Element wird jeweils entsprechend ausgetauscht. Der Austausch wird somit sinnvollerweise sequentiell vorgenommen, wobei alle Arbeitsschritte im Bereich bzw. über die Serviceöffnung erfolgen.

Vorzugsweise weist die Einteilerleiste eine Längsachse auf, die sich unterhalb der Transportebene für die Stückgüter, und quer zur Transportrichtung der Stückgüter erstreckt. Wenn sich die Einteilerleiste in der Wechselposition befindet, ist die Serviceöffnung vorzugsweise in einer Flucht zur Längsachse der Einteilerleiste angeordnet.

Gemäß einer Ausführungsform der Erfindung umfasst die Handhabungsvorrichtung eine Steuereinheit, die die mindestens eine Einteilerleiste ansteuert. Insbesondere kann durch die Steuereinheit die Bewegungsbahn der Einteilerleiste angesteuert werden, um die Einteilerleiste kontrolliert in die Wechselposition benachbart zur Serviceöffnung bzw. zum Zugangsbereich zu bringen. So kann es sich hierbei bspw. um die Gesamtsteuerung der Handhabungsvorrichtung handeln. Über die Steuereinheit kann insbesondere der Produktionsbetrieb der Handhabungsvorrichtung geregelt werden. Weiterhin kann die Einteilerleiste über die Steuereinheit in die Wechselposition gefahren werden, so dass der Austausch des Austauschelementes erfolgen kann.

Wenn die Handhabungsvorrichtung eine Mehrzahl von Einteilerleisten umfasst, deren Austauschelemente bspw. bei einem Produktwechsel jeweils ausgetauscht werden müssen, dann werden die Einteilerleisten nacheinander jeweils in die Wechselposition gebracht. Wird der Austausch durch eine Bedienperson vorgenommen, so können unterschiedliche Sicherheitsmechanismen vorgesehen sein, die sicherstellen, dass eine Einteilerleiste erst aus der Wechselposition herausgefahren wird, wenn der Austausch komplett ist. So kann bspw. vorgesehen sein, dass der Bediener über eine Kontrolleinheit bestimmte Arbeitsschritte quittieren muss, damit die Einteilerleiste über die Bewegungsbahn weitergefahren wird und die nächste Einteilerleiste in die Wechselposition gelangen kann.

Der Bediener darf insbesondere erst die Weiterschaltbedingung für den nächsten Einteilereinschub erhalten, wenn bestimmte Voraussetzungen erfüllt sind. Hierfür kann ein mindestens eine Erkennungseinrichtung, insbesondere ein Sensor, vorgesehen sein, über welche(n) eine Belegung der Profilelemente geprüft werden kann. Bspw. kann ein Endschalter an jedem Profilelement mitgeführt werden, welcher ein Signal an eine Steuereinheit übermittelt, dass ein Austauschelement vorhanden ist. Insbesondere kann hierfür ein JA/NEIN-Mechanismus vorgesehen sein. Ein JA-Signal gibt an, dass ein Austauschelement korrekt am Profilelement bzw. Aufnahmeelement angeordnet ist. Ein Nein-Signal wird ausgegeben, so lange kein Austauschelement am Profilelement bzw. Aufnahmeelement angeordnet ist bzw. wenn sich das Austauschelement nicht in der korrekten Position befindet, weil es bspw. noch nicht vollständig eingeschoben worden ist.

Um zusätzlich sicherzustellen, dass das richtige Austauschelement bzw. die richtige Einteilerleiste eingebaut wurde, kann dies bspw. mit einer an die Steuereinheit gekoppelten Kamera überwacht werden. Alternativ könnte an die Steuereinheit gekoppeltes ein RFID-Auslesegerät Verwendung finden, welches in der Nähe der Handhabungsvorrichtung und insbesondere in der Nähe der Wechselposition angeordnet ist und mit welchem auf den Einteilerleisten angeordnete RFID-Tags ausgelesen werden können.

Gemäß einer Ausführungsform der Erfindung ist vorgesehen, dass die Profilelemente bzw. Profilabschnitte inklusive der austauschbaren Einteilerleisten mit den Einteilfingern in eine Wechselposition bzw. Serviceposition abgesenkt werden können. So kann bspw. vorgesehen sein, dass das Fördermittel, das die Bewegungsbahn der Einteilerleiste vorgibt, relativ zur Transportebene der Artikel in die Wechselposition bzw. Serviceposition absenkbar ist. Auf diese Weise können die Austauschelemente bzw. Einteilerleisten seitlich, also quer zur Transportrichtung, aus den Profilelementen bzw. Aufnahmeelementen bzw. Profilabschnitten herausgezogen werden, ohne dass die Einteilfinger mit den Transportmitteln bzw. der Transportebene für die Artikel kollidieren, zwischen welchen zumindest ein Teil der Einteilfinger im Betriebsmodus zumindest zeitweise angeordnet sind.

Alternativ kann ein Abstand zwischen zwei Einteilerleisten bzw. zwei Profilelementen einstellbar sein, so dass im Falle eines Formatwechsels alle austauschbaren Einteilerleisten und Profilabschnitte zeitgleich unterhalb der Transportebene positioniert werden können. In diesem Fall ist ebenfalls sichergestellt, dass keine Einteilfinger oberhalb des Transportmittels für die Artikel aus der Transportebene herausragen.

Insbesondere wenn die Handhabungsvorrichtung eine Mehrzahl von Einteilerleisten umfasst, kann vorgesehen sein, dass die Steuereinheit das sequentielle Anfahren der Wechselposition durch die Einteilerleisten steuert. Hier kann als zusätzlicher Kontrollmechanismus bspw. ein Kontaktschalter o.ä. vorgesehen sein, der bei korrekter Fixierung bzw. Befestigung der austauschbaren Einteilerleiste am Profilelement bzw. Profilabschnitt aktiviert wird. Erst wenn durch den Kontaktschalter o.ä. die Information gegeben wird, dass das Austauschelement bzw. die austauschbare Einteilerleiste korrekt am Profilelement bzw. am Profilabschnitt angeordnet ist, kann die in der Wechselposition angeordnete Einteilerleiste aus dieser herausgefahren werden und die nachfolgende Einteilerleiste kann nunmehr die Wechselposition einnehmen. Weitere dem Fachmann bekannte Kontrollmechanismen können ebenfalls vorteilhaft eingesetzt werden.

Eine Gruppiervorrichtung umfasst somit insbesondere ein dauerhaft innerhalb der Handhabungsvorrichtung angeordnetes und befestigtes Profilelement und ein gemäß den Anforderungen, insbesondere gemäß den bearbeiteten Produkten, angepasstes Austauschelement bzw. eine austauschbare Einteilerleiste, das/die leicht und möglichst werkzeuglos vom Profilelement lösbar ist und bei einem Produktwechsel schnell und einfach an einer Seite der Handhabungsvorrichtung ausgetauscht werden kann. Da die Befestigung zwischen dem Profilelement und der austauschbaren Einteilerleiste einseitig lösbar ist, ist der Wechsel deutlich vereinfacht, da der Bediener nunmehr nicht mehr nicht mehr zusätzlich eine zweite Befestigung einer Einteilerleiste auf der anderen Seite der Handhabungsvorrichtung lösen muss. Zudem ist es dadurch möglich, wie weiter unten beschrieben, das Lösen und Auswechseln des Austauschelementes der Einteilerleiste mit dem mindestens einen Einteilfinger zu automatisieren.

Der Profilabschnitt und die austauschbare Einteilerleiste weisen jeweils eine Längsachse auf. Insbesondere sind die Längsachsen im verbauten Zustand, d.h. wenn die austauschbare Einteilerleiste funktionell am Profilelement bzw. Profilabschnitt angeordnet ist, parallel oder koaxial zueinander ausgerichtet angeordnet.

Gemäß einer weiteren Ausführungsform der Erfindung hat das Profilelement bzw. der Profilabschnitt parallel oder koaxial zu seiner Längsachse eine Aufnahme für das Austauschelement bzw. für die austauschbare Einteilerleiste ausgebildet. Es kann vorzugsweise vorgesehen sein, dass mindestens eine der senkrecht zur Längsachse des Profilelementes bzw. -abschnittes ausgebildeten Seitenflächen des Profilelementes bzw. Profilabschnittes eine Aufnahmeöffnung für die austauschbare Einteilerleiste aufweist, über welche die austauschbare Einteilerleiste axial in die Aufnahme des Profilelementes einschiebbar oder aufschiebbar ist. Auf diese Weise ist das Austauschelement somit schnell und einfach gegenüber dem Profilelement austauschbar. Wahlweise können hierbei Rastverbinden, magnetische Verbindung o. dgl. diese Positionierung unterstützen bzw. die exakte Positionierung definieren.

Gemäß einer weiteren Ausführungsform der Erfindung ist das Profilelement ein Hohlrohr aus einem Metall wie Aluminium oder einem anderen geeigneten Material, das über seine gesamte Länge eine durchgehende Längsöffnung parallel zur Längsachse aufweist. Das Austauschelement bzw. die austauschbare Einteilerleiste kann bspw. durch ein Vollrohr oder Hohlrohr gebildet sein. Der Außenumfang des Austauschelements bzw. der austauschbaren Einteilerleiste ist zumindest geringfügig geringer als der Innenumfang des Profilelementes, so dass das Austauschelement über die offenen Seitenflächen des Profilelementes mit Spiel senkrecht zur Längsachse des Profilelementes in dieses eingeschoben werden kann. Die Einteilfinger sind in einer Flucht parallel zur Längsachse der austauschbaren Einteilerleiste an dieser angeordnet und weisen bspw. eine dritte Breite auf, die geringer ist als eine erste Breite der durchgehenden Längsöffnung des Profilelementes. Die austauschbare Einteilerleiste wird derart in das Profilelement bzw. in den Profilabschnitt eingeschoben, dass die Einteilfinger durch die durchgehende Längsöffnung des Profilelementes nach außen weisen.

Wahlweise kann weiterhin vorgesehen sein, dass der Profilabschnitt durch ein Profilrohr bzw. eine Montageschiene mit einer Längsachse gebildet ist, die bspw. einen C-förmigen Querschnitt oder einen anderen geeigneten Querschnitt aufweisen kann. Das Profilrohr bzw. die Montageschiene weisen eine durchgehende Längsöffnung parallel zur Längsachse auf, die eine geringere Breite als die Seitenhöhe, innerhalb derer die Längsöffnung ausgebildet ist, einnimmt. So weist das Profilrohr bzw. die Montageschiene bspw. eine integrierte Nut parallel zur Längsachse auf. Die Nut kann weiterhin einen Hinterschnitt aufweisen. Vorzugsweise weist die austauschbare Einteilerleiste ein Außenprofil auf, das zumindest bereichsweise im Wesentlichen das Innenprofil des Profilelementes nachbildet, wobei jedoch zwischen dem Außenprofil der austauschbaren Einteilerleiste bzw. des Austauschelementes und dem Innenprofil des Profilelementes ein gewisses Spiel ausgebildet sein sollte, damit das Austauschelement bzw. die austauschbare Einteilerleiste schnell und einfach in das Profilelement eingeschoben werden kann.

Der mindestens eine Einteilfinger ist derart am Austauschelement bzw. an der austauschbaren Einteilerleiste angeordnet, dass er durch die Längsöffnung des Profilelementes bzw. des Profilabschnittes aus diesem/dieser herausragt. Bei dieser Ausführungsform weist der mindestens eine an der austauschbaren Einteilerleiste angeordnete Einteilfinger eine dritte Breite auf, die geringer ist als eine erste Breite der durchgängigen Längsöffnung der Aufnahme.

Alternativ ist die austauschbare Einteilerleiste derart ausgebildet, dass sie einen ersten Einschubbereich bzw. Innenbereich aufweist, der korrespondierend zum Innenprofil des Profilelementes ausgebildet ist und seitlich in das Profilelement eingeschoben werden kann. Die Einteilfinger sind an einem weiteren Außenbereich der austauschbaren Einteilerleiste angeordnet und können ggf. eine dritte Breite aufweisen, die größer als eine erste Breite der durchgängigen Längsöffnung der Aufnahme sein kann.

Gemäß einer Ausführungsform der Erfindung weist die austauschbare Einteilerleiste zumindest eine zweite Breite auf, die größer ist als eine erste Breite der durchgängigen Längsöffnung der Aufnahme. Bspw. weist der Einschubbereich zumindest eine zweite Breite auf, die größer ist als eine erste Breite der durchgehenden Längsöffnung des Profilelementes. Dadurch wird gewährleistet, dass der Einschubbereich der austauschbaren Einteilerleiste innerhalb des Profilelementes verbleibt und nicht über die Längsöffnung herausfallen kann. Weiterhin weist die austauschbare Einteilerleiste einen schmalen Übertritts- oder Übergangsbereich auf, der eine Breite aufweist, die geringer ist als die erste Breite der durchgehenden Längsöffnung des Profilelementes. Zudem weist die austauschbare Einteilerleiste zumindest einen sog. Außenbereich auf, der im am Profilelement montierten Zustand außerhalb des Profilelementes angeordnet ist. Dieser Außenbereich weist vorzugsweise ebenfalls eine Breite auf, die größer ist als die erste Breite der durchgehenden Längsöffnung des Profilelementes. An dem Außenbereich sind insbesondere die Einteilfinger angeordnet. An einer derartig ausgebildeten austauschbaren Einteilerleiste können insbesondere lösbar montierte Einteilfinger angeordnet sein, die je nach Anforderungen der zu gruppierenden Stückgüter in unterschiedlichen Positionen an der austauschbaren Einteilerleiste angeordnet werden können.

Der mindestens eine Einteilfinger ist weitgehend senkrecht zur Längsachse des Profilelementes und der austauschbaren Einteilerleiste und/oder der durchgängigen Längsöffnung des Profilelementes bzw. des Profilabschnittes angeordnet.

Gemäß den bekannten Ausführungsformen von Handhabungsvorrichtungen sind die Einteilfinger in alle Richtungen stabil. Die Einteilfinger an den gegen zuvor entnommene Einteilerleisten ausgetauschten Einteilerleisten sind vorzugsweise derart konstruiert, dass sie nur in Überschubrichtung des Produkts eine maximale Kraftwirkung entfalten. Eine seitliche Krafteinwirkung kann aufgrund der definierten Laufrichtung des Produkts nahezu ausgeschlossen werden. Hierzu sind die Einteilfinger insbesondere seitlich mit Nutensteinen in einer Nut in dem Austauschelement befestigt, wobei ein Formschluss zwischen den Einteilfingern und der austauschbaren Einteilerleiste durch die Nut selbst in Transportrichtung der Artikel gegeben ist. Quer zur Transportrichtung der Artikel ist der Formschluss durch den klemmbaren Nutenstein gegeben. Alternativ oder zusätzlich kann der Einteilfinger im Querschnitt (horizontal bei vertikal stehendem Einteilfinger durchgeschnitten) zumindest bereichsweise ein Profil aufweisen, welches nicht kreisförmig ist und wobei mehr Material entlang einer Achse in Transportrichtung vorgesehen ist, insbesondere wobei mehr Material quer zur Transportrichtung vorgesehen ist.

Wie bereits beschrieben ist an dem zur Serviceöffnung hinweisenden Ende der Einteilerleiste mindestens ein Befestigungsmittel vorgesehen, das gelöst werden muss, damit der austauschbare Abschnitt von dem Profilelement getrennt werden kann, insbesondere damit das Austauschelement parallel zur Längsachse der Einteilerleiste aus dem Profilelement herausgezogen werden kann.

Das Befestigungsmittel dient insbesondere der ortsfesten Fixierung der austauschbaren Einteilerleiste am Profilelement im laufenden Produktionsbetrieb. Vorzugsweise wird durch das Befestigungsmittel eine seitliche Bewegung der austauschbaren Einteilerleiste im laufenden Produktionsbetrieb unterbunden, insbesondere eine Relativbewegung zwischen der austauschbaren Einteilerleiste und dem Profilelement koaxial oder parallel zu deren Längsachsen. Zudem wird durch das Befestigungsmittel die Position der austauschbaren Einteilerleiste und somit die Position des mindestens einen Einteilfingers am Profilelement festgelegt.

Als Befestigungsmittel finden vorzugsweise Mittel zur werkzeuglosen Verriegelung Anwendung, wie diese bereits oben erwähnt wurden. Insbesondere finden Schnellverschlusssysteme Verwendung. Besonders bevorzugt können diese Schnellverschlusssysteme einhändig bedient werden. Es kann sich hierbei um Verriegelung auf mechanischem Wege, elektromechanisch, elektrisch, pneumatisch, hydraulisch oder durch Software handeln. Es ist also insbesondere möglich, eine elektrische gesteuerte Verriegelung eines Riegels über die Steuerungseinheit der Handhabungsvorrichtung zu bewirken. Oder aber es handelt sich um eine einfache mechanische Verriegelung in Form eines Riegels oder ähnlichem, der eine seitliche Bewegung des Austauschelementes verhindert und der durch den Benutzer vorzugsweise einfach, schnell und/oder werkzeuglos gelöst bzw. gesichert werden kann. Auch magnetische oder mechanisch rastende Verbindungen, ggf. elektromagnetisch entrastbar bzw. lösbar, kommen für die Positionierung der Einteilerleisten in den Profilabschnitten in Frage.

Wie bereits oben beschrieben, kann mit der korrekten Befestigung des Befestigungsmittels an der Einteilerleiste ein Kontrollmechanismus gekoppelt sein, der verhindert, dass die Einteilerleiste die Wechselposition verlassen kann, solange sie nicht korrekt am Profilelement positioniert ist. Dadurch können Fehleinbaupositionen wirksam verhindert werden.

Gemäß einer Ausführungsform der Erfindung ist vorgesehen, dass das Profilelement an dem gegenüberliegenden Ende der Einteilerleiste bspw. eine verschlossene Seitenfläche aufweist, so dass das Einschieben der austauschbaren Einteilerleiste in das Profilelement durch die verschlossene Seitenfläche räumlich begrenzt ist. In diesem Zusammenhang könnte alternativ ein Einrastmechanismus o.ä.in einem dem Befestigungsmittel gegenüberliegenden Endbereich vorgesehen sein, der den Endbereich der austauschbaren Einteilerleiste an den Endbereich des Profilelementes leicht lösbar fixiert. Dies könnte bspw. durch eine Art Zwangsführung der austauschbaren Einteilerleiste in dem Profilelement erreicht werden. Diese leicht lösbare Fixierung bzw. Zwangsführung o.ä. muss insbesondere auf Zug lösbar sein und sich beim Herausziehen der austauschbaren Einteilerleiste über die Serviceöffnung selbständig lösen.

Gemäß einer Ausführungsform der Erfindung kann der Austausch der austauschbaren Einteilerleiste bei einem Formatwechsel automatisiert werden. Bspw. kann der Austausch durch einen geeigneten Roboter ausgeführt werden. Derselbe Roboter kann bei einer Formatumstellung der Verpackungsanlage bzw. im laufenden Betrieb der Verpackungsanlage auch andere Funktionen übernehmen, bspw. einen Austausch von Verpackungsmaterialien, bspw. Folienrollen oder Kartonmagazine.

Weiterhin kann der Handhabungsvorrichtung ein Magazin mit austauschbaren Einteilerleisten zugeordnet sein bzw. die Handhabungsvorrichtung kann ein Magazin mit austauschbaren Einteilerleisten umfassen. Das Magazin ist vorzugsweise in unmittelbarer Nachbarschaft zu einer Serviceöffnung bzw. zu einem Zugangsbereich angeordnet, die/der der Wechselposition entspricht, an der der Austausch der austauschbaren Einteilerleisten erfolgt. Bei einem Formatwechsel kann die Entnahme von austauschbaren Einteilerleisten aus dem Magazin und der Austausch der Einteilerleisten an den Profilelementen der Handhabungsvorrichtung automatisiert erfolgen.

Insbesondere können in dem Magazin verschiedene austauschbare Einteilerleisten auf definierten Positionen angeordnet vorgesehen sein. Bei einem Formatwechsel werden die entsprechenden Parameter in die Steuereinheit eingegeben. Diese berechnet dann, welche Einteilerleiste benötigt wird und steuert die Entnahme der jeweiligen austauschbaren Einteilerleiste aus dem Magazin und den Wechsel am Profilelement. Dies kann bspw. automatisiert durch einen Roboter, ein Revolver- Magazin, ein Paternoster- Magazin ö.ä. erfolgen.

Gemäß einer weiteren Ausführungsform kann vorgesehen sein, die Einteilfinger an den austauschbaren Einteilerleisten variabel anzuordnen. Insbesondere können die Einteilfinger werkzeugfrei lösbar an der austauschbaren Einteilerleiste angeordnet sein. So kann die austauschbare Einteilerleiste bspw. Rasteinrichtungen aufweisen und der mindestens eine Einteilfinger kann mindestens ein korrespondierendes Rastmittel aufweisen, das zur Ausbildung einer Rastverbindung zwischen der Einteilerleiste und dem mindestens einen Einteilfinger geeignet ist. Dadurch kann eine austauschbare Einteilerleiste für mehrere Formate verwendet werden. Die Einstellung der Einteilfinger an den austauschbaren Einteilerleisten könnte bspw. zeitlich parallel zu einer Einstellung der Transportspuren für die Artikel erfolgen. Insbesondere könnte eine mechanische Kopplung zwischen den die Artikelspuren trennenden Gassenblechen und/oder den Transportspuren für die Artikel mit den Einteilfingern vorgesehen sein. Insbesondere kann vorgesehen sein, dass bei einer Verstellung der Gassenbleche und/oder bei der Verstellung der Transportspuren für die Artikel mit den zugehörigen Transportbändern, insbesondere Förderbändern o.ä. insbesondere bei einer Verstellung der Gassenbleche oder Transportspuren in horizontaler Richtung senkrecht zur Transportrichtung, die Einteilfinger entsprechend mitgenommen werden.

Die Erfindung betrifft weiterhin eine bewegliche Einteilerleiste mit mindestens einem daran befestigten Einteilfinger, die insbesondere Bestandteil einer oben beschrieben Vorrichtung zum Gruppieren von Stückgut ist. Die bewegliche und austauschbare Einteilerleiste kann insbesondere ein oder mehrere Merkmale und/oder Eigenschaften der zuvor beschriebenen Handhabungsvorrichtung umfassen.

Die Erfindung bezieht sich weiterhin auf eine Verpackungsanlage, die mindestens eine Handhabungsvorrichtung zum Einteilen der Artikel oder Stückgüter in gewünschte Gruppierungen bzw. zum Vereinzeln und Beabstanden der Stückgüter und mindestens eine Vorrichtung zum weiteren Verarbeiten der gruppierten bzw. vereinzelten Stückgüter umfasst, bspw. eine Vorrichtung zum zumindest teilweisen Zusammenfassen der gruppierten Stückgüter in Form eines Gebindes. Dabei kann es sich bspw. um ein Folieneinschlagmodul mit Schrumpftunnel handeln, wobei die gruppierten Artikel oder Stückgüter von einer Schrumpffolie umhüllt werden, die im Schrumpftunnel eng auf die Artikel oder Stückgüter aufgeschrumpft wird, so dass ein Gebinde entsteht, in dem die Artikel oder Stückgüter fest zusammengefasst sind. Alternativ kann es sich um ein Kartoneinschlagmodul handeln. Die Artikel- bzw. Stückgutgruppe wird auf einem Kartonzuschnitt platziert, der um die Artikel bzw. Stückgüter herum gefaltet wird. Weiterhin könnte es sich um eine Gruppiervorrichtung handeln, die unterschiedliche vereinzelte Artikel zu so genannten gemischten Gebinden zusammenfasst und anschließend einer weiteren Verpackung zuführt o.ä. Dem Fachmann sind weitere Verpackungsmaschinen bekannt, die ebenfalls Bestandteil einer solchen Verpackungsanlage sein können. Die Handhabungsvorrichtung der Verpackungsanlage weist insbesondere ein oder mehrere Merkmale und/oder Eigenschaften der zuvor beschriebenen Handhabungsvorrichtung auf.

Zur Erreichung des oben genannten Ziels schlägt die Erfindung zudem ein Verfahren zum Formatwechsel innerhalb einer Vorrichtung gemäß einer der zuvor beschriebenen Ausführungsvarianten.

Die Fixierung der Einteilerleiste wird für einen durchzuführenden Formatwechsel vom wenigstens einen Profilabschnitt werkzeuglos gelöst und durch eine andere Einteilerleiste mit gegenüber der entnommenen Einteilerleiste anders positionierten und/oder anders zueinander beabstandeten Einteilfingern unter Nutzung der definierten Einbauposition am Profilabschnitt ersetzt. Bei dem Verfahren wird die Einteilerleiste durch

Verschieben entlang ihrer Längserstreckungsrichtung aus dem form- und/oder kraftschlüssigen Kontakt mit dem wenigstens einen Profilabschnitt gebracht und von diesem getrennt.

Bei dem Verfahren wird somit nicht das gesamte Einteilermodul aus der Handhabungsvorrichtung gelöst und ausgetauscht. Stattdessen wird nur die austauschbare Einteilerleiste in einem Wechselmodus ausgewechselt. Hierbei wird die Einteilerleiste einseitig im Bereich eines Zugangsbereichs oder einer Serviceöffnung von dem Profilelement oder dem Profilabschnitt gelöst. Anschließend wird das Austauschelement über die Serviceöffnung aus der Handhabungsvorrichtung entnommen. Daraufhin kann ein neues Austauschelement über die Serviceöffnung in das Profilelement eingeführt und das Austauschelement in korrekter Positionierung am Profilelement fixiert werden.

Wahlweise kann die Einteilerleiste in ihrer Betriebslage zur Fixierung einer definierten Einbauposition magnetisch und/oder mechanisch mit dem wenigstens einen Profilabschnitt verrastet sein. Zudem ist vorgesehen, dass die Einteilerleiste zur Durchführung eines Formatwechsels über mindestens einen Zugangsbereich bzw. eine Serviceöffnung einseitig aus der Vorrichtung entnommen und/oder gegen eine weitere Einteilerleiste ausgetauscht wird. Hierbei kann eine Steuereinheit der Vorrichtung die Bewegungen des Profilabschnittes steuern und die Positionierungen des Profilabschnittes entlang seiner Bewegungsbahn definieren, wobei die Einteilerleiste insbesondere durch die Steuereinheit kontrolliert in die Wechselposition benachbart zum Zugangsbereich bzw. zur Serviceöffnung gebracht wird.

Demzufolge kann der Austausch des Austauschelementes insbesondere folgende Schritte umfassen: Zuerst wird die Einteilerleiste in einer definierten Wechselposition an der Handhabungsvorrichtung im Bereich einer Serviceöffnung angeordnet. Dann wird die einseitige Befestigung der ein oder mehreren Befestigungsmittel an dem der Serviceöffnung zugewandten Ende der Einteilerleiste zwischen dem Austauschelement und dem Profilelement gelöst. Anschließend wird die austauschbare Einteilerleiste auf der Seite der einseitigen Befestigung über die Serviceöffnung aus der Handhabungsvorrichtung entnommen. Insbesondere wird die austauschbare Einteilerleiste über die Serviceöffnung der Handhabungsvorrichtung aus dem Profilelement herausgezogen.

Zur Anordnung einer neuen Einteilerleiste wird eine solche über die Serviceöffnung in das Profilelement eingeführt, insbesondere eingeschoben. Die neue Einteilerleiste wird über das mindestens eine Befestigungsmittel an dem der Serviceöffnung zugewandten Ende des Profilelementes einseitig an diesem fixiert, insbesondere um ein seitliches, relatives Verschieben zwischen der austauschbaren Einteilerleiste und dem Profilelement zu verhindern, das sich auf die Positionierung der Einteilfinger auswirken würde.

Vorzugsweise ist vorgesehen, dass in dem Wechselmodus der Handhabungsvorrichtung die Einteilerleiste gesteuert in die Wechselposition gebracht wird. Das Verfahren kann alternativ oder zusätzlich zu den beschriebenen Merkmalen ein oder mehrere Merkmale und/oder Eigenschaften der zuvor beschriebenen Handhabungsvorrichtung umfassen. So kann bei dem Verfahren vorgesehen sein, dass bei einem Formatwechsel der Austausch der austauschbaren Einteilerleiste an dem Profilelement über den Zugangsbereich der Vorrichtung bzw. über deren Serviceöffnung automatisiert ist, wobei der Vorrichtung insbesondere ein Magazin mit mehreren Einteilerleisten zugeordnet ist, wobei bei einem Formatwechsel die Entnahme der jeweiligen Einteilerleiste aus dem Profilabschnitt der Vorrichtung, die Entnahme einer neuen Einteilerleiste aus dem Magazin und der Austausch der Einteilerleisten an dem Profilabschnitt automatisiert sind. Darüber hinaus kann das Verfahren vorsehen, dass der Austausch der Einteilerleisten an der jeweiligen Wechselposition über den Zugangsbereich bzw. über die Serviceöffnung automatisiert erfolgt, insbesondere mit Hilfe einer Handhabungseinrichtung bzw. eines Roboters.

Die Vorteile der Vorrichtung zum Gruppieren von Stückgut und des Verfahrens bestehen insbesondere darin, dass die Umstellzeiten bei einem Produktwechsel deutlich verringert sind. Dies ist insbesondere dadurch möglich, da der Bediener nicht mehr die gesamte Einteilerleiste von zwei Seiten her lösen muss, insbesondere von einer Serviceseite und einer gegenüberliegenden Bedienseite, um diese aus der Handhabungsvorrichtung entnehmen zu können und eine neue Einteilerleiste in der Handhabungsvorrichtung verbauen zu können. Der Austausch erfolgt nur mehr durch Einschieben eines Teils der Einteilerleiste in Form eines Austauschelementes in ein fest innerhalb der Handhabungsvorrichtung verbautes an der umlaufenden Bewegungsbahn der Einteilerleiste angeordnetes Profilelement von einer Seite der Handhabungsvorrichtung her. Somit muss der Bediener auch nicht mehr um die Vorrichtung oder Anlage herumlaufen, um eine zweite Befestigung zu lösen.

Bei einem herkömmlichen Wechsel der Einteilerleisten werden die Einteilerleisten dagegen durch den Benutzer durch Kurbeln o.ä. in eine geeignete Position gebracht, wobei es zu Beschädigungen an der Handhabungsvorrichtung kommen kann. Aufgrund der nunmehr definierten Wechselposition, die vorzugsweise einfach angesteuert werden kann, können solche Schädigungen der Handhabungsvorrichtung ausgeschlossen werden.

Die fest in der Handhabungsvorrichtung verbauten Profilelemente stabilisieren die Einteilerleisten im laufenden Produktionsbetrieb. Insbesondere werden die Austauschelemente und der mindestens eine Einteilerfinger durch die Profilelemente vor Torsion bzw. Verzug geschützt, da eine Bewegung des Austauschelementes bzw. des mindestens einen Einteilerfingers immer in Verbindung mit einer Bewegung des Profilelementes erfolgt.

Da nicht mehr die komplette Einteilerleiste bei einem Produktwechsel ausgetauscht werden muss, sondern nur noch ein Teil, insbesondere das Austauschelement mit dem mindestens einen Einteilerfinger, führt dies zu einer Material- und somit Kosteneinsparung der zum Austausch vorzuhaltenden Formatteile.

Ein weiterer Vorteil der Handhabungsvorrichtung und des Verfahrens besteht darin, dass der Formatwechsel nunmehr auch automatisiert erfolgen kann, wodurch wiederum Kosten gespart werden können.

Weiterhin wird ein Transportabschnitt zur Beförderung von Stückgütern innerhalb einer Verpackungsanlage und/oder Handhabungseinrichtung für die Stückgüter beschrieben, der mindestens ein Transportmittel mit einer Transportebene für die in einer Transportrichtung bewegten Stückgüter sowie mindestens ein innerhalb des Transportabschnittes von unten in die Transportebene eintauchendes Einteilelement umfasst. Das an mindestens einem Stückgut angreifende und dieses gegenüber einer Fördergeschwindigkeit des Transportmittels verzögernde oder beschleunigende Einteilelement ist durch wenigstens einen Einteilfinger gebildet, der mit einer Einteilerleiste verbunden ist, die mitsamt einem die Einteilerleiste in zumindest abschnittsweise formschlüssigen und/oder kraftschlüssigen Kontakt fixierenden Profilelement unterhalb der Transportebene in einer definierten Bewegungsbahn beweglich geführt ist. Die Einteilerleiste ist durch Verschieben entlang ihrer Längserstreckungsrichtung aus dem form- und/oder kraftschlüssigen Kontakt mit dem Profilelement bringbar und von diesem trennbar. Weitere Aspekte und Abwandlungen dieses Transportabschnittes sind bereits oben definiert; alle die im Zusammenhang mit der erfindungsgemäßen Gruppiervorrichtung bzw. im Zusammenhang mit dem erfindungsgemäße Verfahren genannten Aspekte und Varianten beziehen sich gleichermaßen auf den Transportabschnitt zur Beförderung von Stückgütern innerhalb einer Verpackungsanlage.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine schematische Draufsicht auf eine Handhabungsvorrichtung zur Einteilung Stückgütern mittels Einzelfingern.
Fig. 1B zeigt eine Seitenansicht der Handhabungsvorrichtung aus Fig. 1A.
Fig. 2A zeigt eine erste Ausführungsform eines Einteilerleistenmoduls in perspektivischer Darstellung.
Fig. 2B zeigt eine weitere perspektivische Ansicht des Einteilerleistenmoduls gemäß Fig. 2A.
Fig. 3A zeigt die teilweise herausgezogene Einteilerleiste eines Einteilerleistenmoduls gemäß Figuren 2A und 2B.
Figur 3B zeigt eine weitere perspektivische Ansicht der teilweise herausgezogenen Einteilerleiste gemäß Figur 3A.
Fig. 4A zeigt die Anordnung einer Einteilerleiste und eines Einteilerleistenmoduls innerhalb einer Handhabungsvorrichtung.
Fig. 4B zeigt eine weitere perspektivische Ansicht der Anordnung der Einteilerleiste innerhalb der Handhabungsvorrichtung gemäß Fig. 4A.
Fig. 4C zeigt eine dritte perspektivische Ansicht der Anordnung der Einteilerleiste innerhalb der Handhabungsvorrichtung gemäß Figuren 4A und 4B.
Fig.5 zeigt einen vergrößerten Teilbereich aus Figur 4C.
Fig. 6 zeigt einen Querschnitt durch eine zweite Ausführungsform eines Einteilerleistenmodul.
Fig. 7 zeigt eine weitere Ausführungsform einer austauschbaren Einteilerleiste eines Einteilerleistenmoduls.

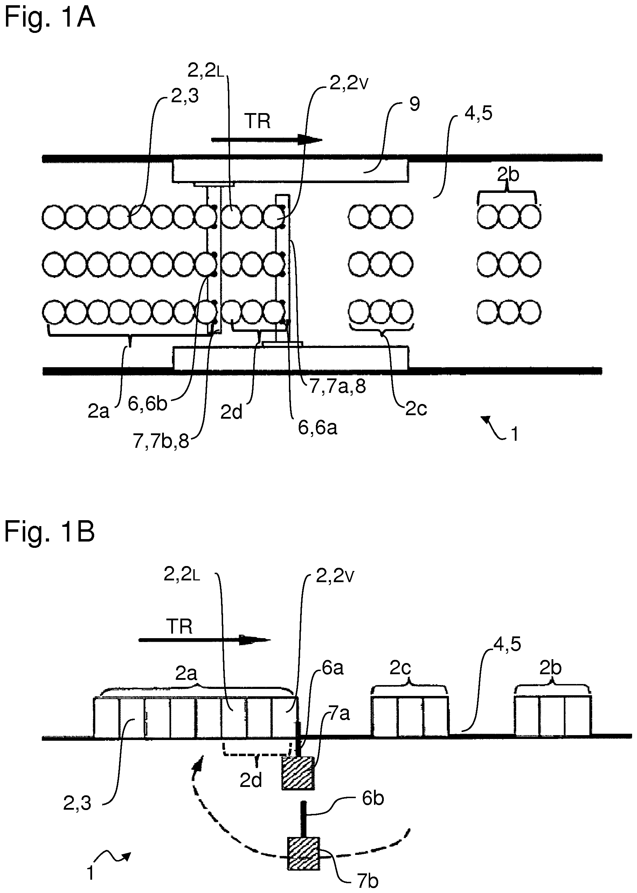

Für gleiche oder gleich wirkende Elemente der Erfindung werden in den Figuren 1A bis 7 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Handhabungsvorrichtung sowie die erfindungsgemäße Verfahren ausgestaltet sein können und stellen keine abschließende Begrenzung dar.

Die schematische Draufsicht der Fig. 1A zeigt eine Handhabungsvorrichtung 1, die dem Gruppieren von Stückgütern 2 dient, welche in parallelen Stückgutströmen 2a in einer Transportrichtung TR befördert werden. Die Fig. 1B zeigt eine Seitenansicht der Handhabungsvorrichtung 1.

Die Figuren 1A und 1B lassen erkennen, dass bereits in Reihen gruppierte, sich noch im Stückgutstrom befindliche Stückgüter 2, die bspw. durch Getränkebehälter 3, Flaschen oder Dosen gebildet sein können, aufrecht stehend auf einem Transportmittel 4 transportiert werden, und zwar jeweils mehrreihig und durch Unterstützung von Reibschluss in einer Transportrichtung TR. Die durch das Transportmittel 4 gebildete Auflageebene für die Stückgüter 2 bildet gleichzeitig die Transportebene 5. Die Handhabungsvorrichtung 1 umfasst zum Gruppieren der Stückgüter 2 Einteilfinger 6, die an Einteilerleisten 7 angeordnet sind. Die Einteilfinger 6 werden mit den Stückgütern 2 durch die Transportebene 5 hindurch von unten in Eingriff gebracht. Das Transportmittel 4 kann bspw. durch mehrere mit seitlichen Zwischenabständen parallel verlaufende Förderbänder gebildet sein, wodurch für die Einteilfinger 6 ein freier Durchgriff gegeben ist. Im vorliegenden Fall verfügt die Handhabungsvorrichtung 1 über zwei unabhängige Gruppen von Einteilfingern 6a und 6b, die auf zwei nicht miteinander mechanisch verbundenen Einteilerleisten 7a und 7b angeordnet sind. Die Einteilerleisten 7a, 7b sind bspw. als parallel zur Transportebene 5 verlaufende Kragarme 8 ausgebildet, die ihre Befestigung an jeweils einem eigenen vertikalen Kreuztisch 9 o. dgl. Antriebseinheit seitlich außerhalb und unterhalb des Transportmittels 4 finden.

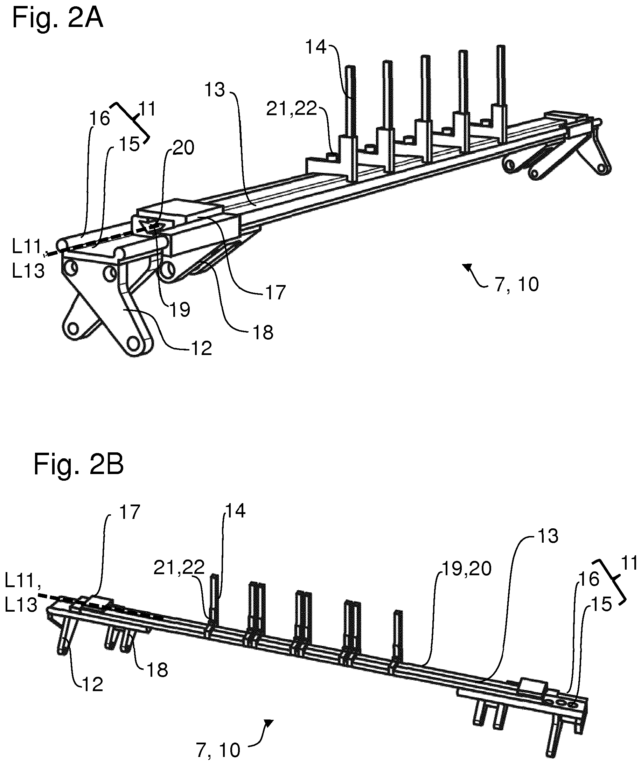

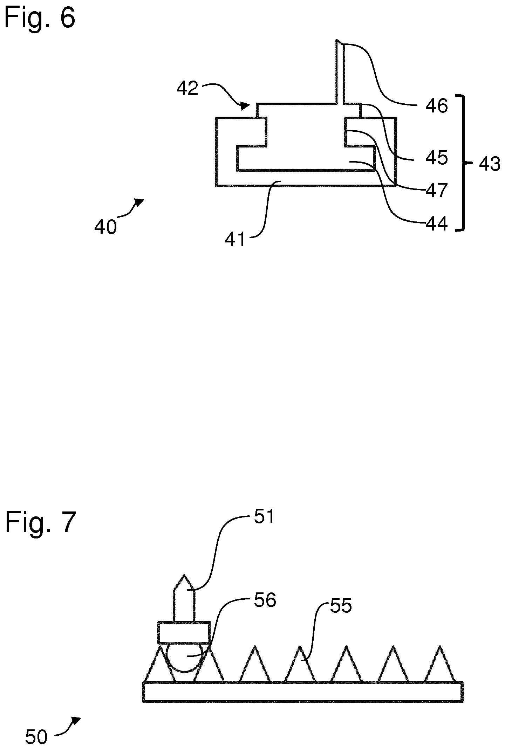

Wie anhand der perspektivischen Darstellungen der Figuren 2A bis 5 sowie anhand der schematischen Darstellungen der Figuren 6 und 7 näher erläutert wird, sind die Einteilerleisten 7a und 7b gemäß vorliegender Erfindung jeweils auswechselbar, und zwar vorzugsweise ohne Zuhilfenahme von Spezialwerkzeug, und sind zu diesem Zweck mehrteilig ausgebildet (siehe hierzu etwa Fig. 6).

Ein mittels der Handhabungsvorrichtung 1 durchzuführender Gruppiervorgang ist anhand der schematischen Seitenansicht der Fig. 1B näher verdeutlicht. Die Einteilfinger 6a der Einteilerleiste 7a werden gerade von unten in Eingriff mit einem im Wesentlichen geschlossenen Stückgutstrom 2a gebracht. Die Einteilfinger 6b der in Transportrichtung TR um eine Stückgutgruppenlänge vorauslaufenden Einteilerleiste 7b standen zuvor im Eingriff mit bereits gruppierten Stückgütern 2c (Stückgutgruppe 2c). In dieser Phase bewegen sich die Einteilfinger 6a und die Einteilerleiste 7a langsamer als das Transportmittel 4, d.h. das zuvorderst befindliche Stückgut 2 im Stückgutstrom 2a wird an die vorauslaufenden Einteilfinger 6a gedrängt. Durch die Differenzgeschwindigkeit des Transportmittels 4 und der Einteilerleiste 7a bewegen sich die bereits abgetrennten Stückgutgruppen 2c und 2b schneller als der von den Einteilfingern 6a noch gebremste Stückgutstrom 2a. Dadurch entstehen die dargestellten Abstände zwischen den einzelnen Stückgutgruppen 2b, 2c und 2a bzw. 2d.

In Fig. 1A ist insbesondere eine Situation dargestellt, in der die Stückgutgruppen 2b und 2c bereits komplett von dem Stückgutstrom 2a abgetrennt sind, während sich die Stückgutgruppe 2d gerade in einer Phase der Abtrennung befindet. So wird insbesondere das vorauseilende Stückgut 2_{V} der Stückgutgruppe 2d noch durch die Einteilfinger 6a der Einteilerleiste 7a zurückgehalten, während der dem letzten Stückgut 2_{L} der abzutrennenden Stückgutgruppe 2d nachlaufende Stückgutstrom 2a durch die Einteilfinger 6b der Einteilerleiste 7b zurückgehalten wird. Zu diesem Zeitpunkt kann insbesondere vorgesehen sein, dass die Geschwindigkeit der vorauseilenden Einteilerleiste 7a größer ist als die Geschwindigkeit der nachlaufenden Einteilerleiste 7b. Weiterhin ist es sinnvoll, wenn die Geschwindigkeit der vorauseilenden Einteilerleiste 7a geringer ist als die Transportgeschwindigkeit TR des Transportmittels 4 und somit die Transportgeschwindigkeit TR der bereits abgetrennten Stückgutgruppen 2b und 2c.

Die Abstände zwischen den abgetrennten Stückgutgruppen 2b und 2c werden entsprechend dem notwendigen Teilungsmaß einer nachgeordneten Verpackungsmaschine, bspw. einer Verpackungsmaschine, die die Stückgutgruppen in Folien- oder Kartonzuschnitte einhüllt, eingestellt.

Während der Stückgutstrom 2a durch die Einteilfinger 6a der Einteilerleiste 7a zurückgehalten wird, werden die Einteilfinger 6b der Einteilerleiste 7b von unten derart in den Stückgutstrom 2a hineingefahren, dass eine Stückgutgruppe 2d abgetrennt werden kann. So kann hierbei die Geschwindigkeit der vorauseilenden Einteilerleiste 7a bspw. gegenüber der Geschwindigkeit der Einteilerleiste 7b erhöht werden, gegebenenfalls bis hin zur Transportgeschwindigkeit TR des Transportmittels 4. Ist die Abtrennung der Stückgutgruppe 2d nach Erreichen des gewünschten Abstandes vom Stückgutstrom 2a und von der Stückgutgruppe 2c vollständig erreicht, so wird die Einteilerleiste 7a während einer ggf. kurzzeitig beschleunigten Vorwärtsbewegung aus der Transportebene 4 nach unten heraus gefahren, wie dies für die Einteilerleiste 7b in Figur 1B angedeutet ist.

Die Einteilfinger 6a an der Einteilerleiste 7a werden anschließend wieder von unten in den Stückgutstrom 2a eingefahren, wodurch sich auf Grund der Differenzgeschwindigkeit des Transportmittels 4 und der Einteilerleiste 7a nun eine neue Stückgutgruppe am vorlaufenden Ende vom im Wesentlichen geschlossenen Stückgutstrom 2a abzulösen beginnt. Um die jeweiligen Gruppierungen des Stückgutstroms 2a durchführen zu können, bewegt sich die Einteilerleiste 7b mit den Einteilfingern 6b entgegen der Transportrichtung TR der Stückgüter 2 unterhalb der Einteilerleiste 7a zurück zu einer Ausgangsposition, an der die Einteilfinger 6b unter Umkehrung ihrer Bewegungsrichtung, die nun wieder parallel zur Transportrichtung TR erfolgt, von unten durch die Transportebene 5 in den Stückgutstrom 2a eintauchen können.

Aus der obigen Beschreibung wird unmittelbar deutlich, dass unterschiedliche Größen und Durchmesser der Stückgüter 2 im Stückgutstrom 2a jeweils unterschiedliche Abstände der Einteilfinger 6, 6a, 6b an den jeweiligen Einteilerleisten 7, 7a, 7b erfordern. Um im Gruppierungsprozess mit diesen unterschiedlichen Abständen arbeiten zu können, ist es unumgänglich, entweder die Einteilfinger 6, 6a, 6b an den in der Handhabungsvorrichtung 1 verbleibenden Einteilerleisten 7, 7a, 7b zu lösen und an veränderten Positionen zu montieren, was jedoch aufgrund des Einstellaufwandes und des enormen Zeitaufwandes einen bedeutenden Nachteil des bisher bekannten Standes der Technik darstellt. Die Erfindung liefert dagegen eine praktikable und sehr vorteilhafte Möglichkeit, die kompletten Einteilerleisten 7, 7a, 7b aus der Vorrichtung 1 zu entnehmen und durch solche mit passend beabstandeten Einteilfingern 6, 6a, 6b zu ersetzen, was aufgrund der nachfolgend näher erläuterten modularen Konfiguration der Einteilerleisten 7, 7a und 7b besonders einfach und zeitsparend durchführbar ist.

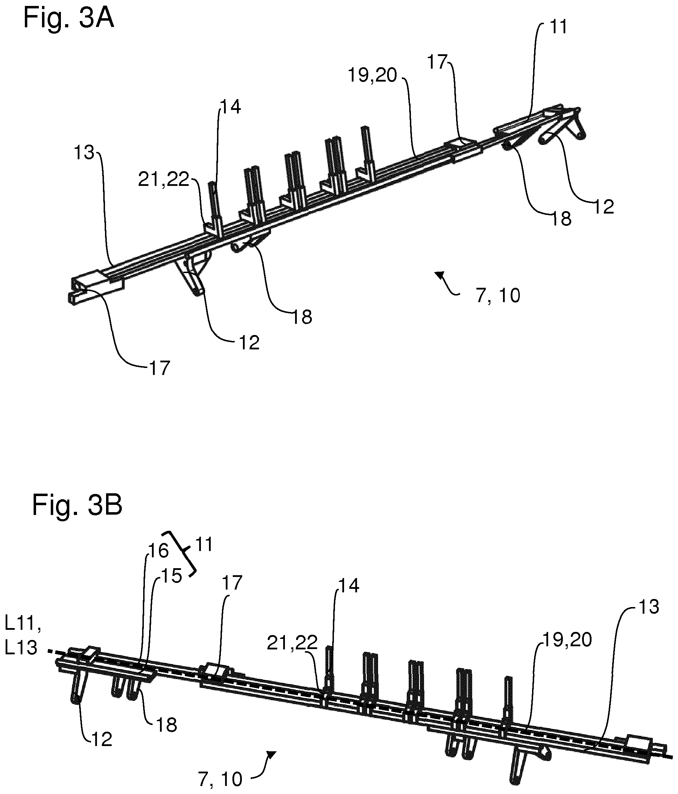

Die schematischen Perspektivdarstellungen der Figuren 2A und 2B zeigen unterschiedliche Ansichten einer ersten Ausführungsform eines die Einteilerleiste 7 gemäß Fig. 1A und Fig. 1B bildenden Moduls 10, bestehend aus einem Profilabschnitt 11 oder Profilelement und einer damit form- und/oder kraftschlüssig verbindbaren und im Profilabschnitt 11 gehaltenen austauschbaren Einteilerleiste 13, die hier auch als Einschubleiste bezeichnet werden kann; die Figuren 3A und 3B zeigen die teilweise aus dem Profilabschnitt 11 herausgezogene Einteilerleiste 13 gemäß Figuren 2A und 2B in unterschiedlichen perspektivischen Ansichten.

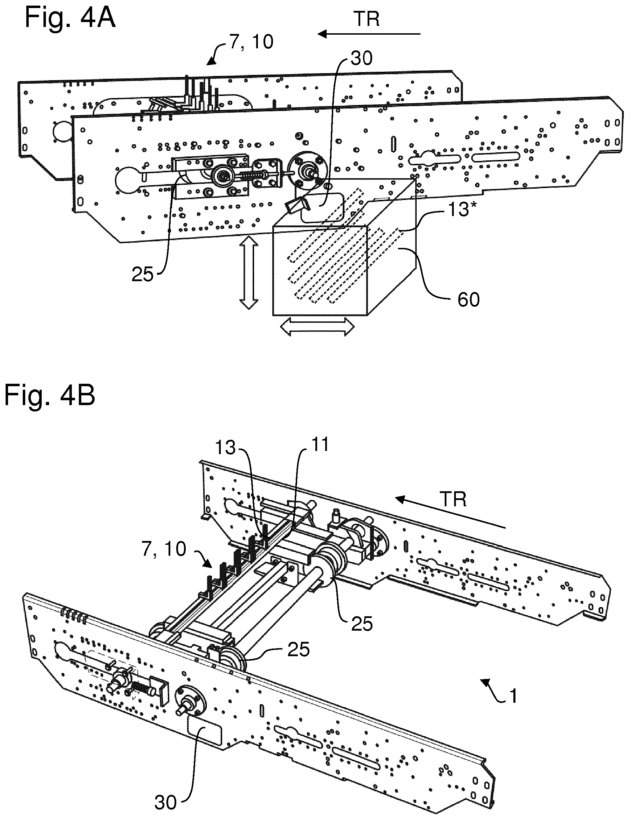

Das Einteilerleistenmodul 10 der Einteilerleiste 7 umfasst ein Profilelement 11 oder Profilabschnitt 11 und die eigentliche austauschbare Einteilerleiste 13, an der Einteilfinger 14 angeordnet sind. Das Profilelement 11 ist über Befestigungsmittel 12 und 18 innerhalb der Handhabungsvorrichtung 1 (vgl. Figuren 4A bis 4C) befestigt; das Profilelement 11 ist innerhalb der Handhabungsvorrichtung 1 insbesondere umlaufend geführt angeordnet.

Die Einteilerleiste 13 und der Profilabschnitt bzw. das Profilelement 11 sind zumindest weitgehend formschlüssig und lösbar aneinander gekoppelt. Insbesondere weist das Profilelement 11 mindestens eine Aufnahme 15 auf, in die die Einteilerleiste 13 zumindest teilweise aufgenommen werden kann. Insbesondere wird die Aufnahme 15 durch zwei seitliche Bereiche 16 begrenzt. Insbesondere weisen Profilelement 11 und Einteilerleiste 13 jeweils eine Längsachse L11, L13 auf, die parallel oder koaxial zueinander ausgerichtet sind. Die seitlichen Bereich 16 erstrecken sich ebenfalls parallel zu der Längsachse L11 des Profilelementes. Die Einteilerleiste 13 kann insbesondere axial in die Aufnahme 15 zwischen die beiden seitlichen Bereiche 16 des Profilelements 11 eingeschoben werden. An den freien Enden der Einteilerleiste 13 sind jeweils Positionierung- und/oder Verriegelungseinheiten 17 angeordnet, die bspw. mittels eines Schnellverschlusssystems (nicht dargestellt) die Einteilerleiste 13 sicher an dem Profilelement 11 festlegen.

Die Positionierung- und/oder Verriegelungseinheiten 17 können insbesondere derart ausgebildet sein, dass sich die Positionierung- und/oder Verriegelungseinheiten 17 nur durch ein Schnellverschlusssystem (nicht dargestellt) verriegeln lassen, wenn die Einteilerleiste 13 korrekt am Profilelement 11 positioniert ist. Dadurch können wirksam Fehleinbaupositionen verhindert werden.

Die Einteilfinger 14 sind im dargestellten Ausführungsbeispiel lösbar an der Einteilerleiste 13 angeordnet. Insbesondere weist die Einteilerleiste 13 entlang ihrer Längsachse L13 eine durchgängige Nut 19 mit Hinterschnitt 20 auf, in die Befestigungsmittel 21, insbesondere Schraubmittel 22 o.ä., zur Festlegung der Einteilfinger 14 an der Einteilerleiste 13 eingreifen können.

Die Einteilfinger 14 sind senkrecht zur Längsachse L11 des Profilelementes 11 angeordnet und sind insbesondere in einer Flucht angeordnet.

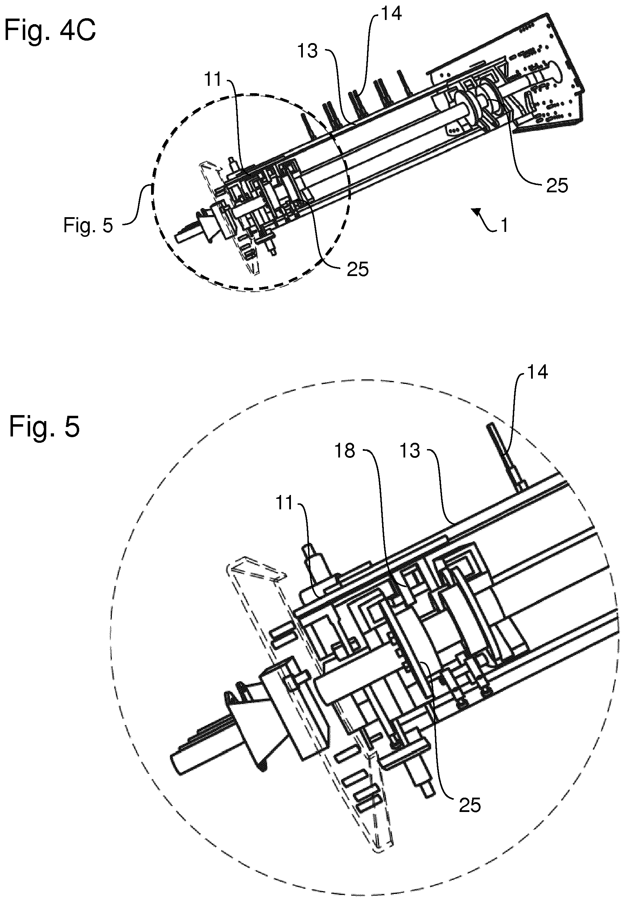

Die Figuren 4A bis 4C zeigen unterschiedliche perspektivische Ansichten der Anordnung des Einteilerleistenmoduls 10 innerhalb einer Handhabungsvorrichtung 1, während die Fig. 5 eine Detailansicht eines Bereichs aus Fig. 4C zeigt.

Das Profilelement 11 des Einteilerleistenmoduls 10 ist über die Befestigungselemente 12 (nicht sichtbar) und 18 dauerhaft innerhalb der Handhabungsvorrichtung 1 angeordnet und befestigt. Insbesondere ist das Profilelement 11 über die Befestigungselemente 18 an einer umlaufenden Kette eines Endlosfördermittels (nicht dargestellt) angeordnet, so dass es innerhalb der Handhabungsvorrichtung 1 auf einer geführten Umlaufbahn beweglich ist. In den Figuren 4A bis 5 sind Umlenkrollen 25 zu erkennen, über die Endlosfördermittel geführt sind. Insbesondere ist jeweils im Bereich der freien Enden des Profilelements 11 eine Befestigung an einem Endlosfördermittel vorgesehen, damit die Bewegung des Profilelements 11 innerhalb der Handhabungsvorrichtung 1 ausreichend und sicher geführt ist. Vorzugsweise sind die beiden Endlosfördermittel an einen gemeinsamen Antrieb gekoppelt, so dass die beiden Endlosfördermittel synchron angetrieben werden. Es ist jedoch auch denkbar, zwei Antriebe vorzusehen, die synchron angesteuert werden. Alternativ kann vorgesehen sein, das Profilelement 11 an einem Endlosfördermittel zu befestigen, das eine Breite senkrecht zur Transportrichtung TR aufweist, die in etwa der Länge des Profilelements 11 entspricht.

Die Einteilerleiste 13 des Einteilerleistenmoduls 10 ist leicht vom Profilelement 11 lösbar, so dass es bei einem Produktwechsel schnell und einfach ausgetauscht werden kann. Insbesondere ist für den Austausch eine spezielle Wechselposition an der Handhabungsvorrichtung 1 vorgesehen. An der Wechselposition weist die Handhabungsvorrichtung 1 eine Serviceöffnung 30 auf, über die die Einteilerleiste 13 des mindestens einen Einteilerleistenmoduls 10 einfach ausgewechselt werden kann, wobei die mechanische Koppelung zwischen dem Profilelement 11 und der Einteilerleiste 13 des Einteilerleistenmoduls 10 gelöst wird. Für den Austausch wird das Einteilerleistenmodul 10 in die Wechselposition gefahren, so dass sich das Einteilerleistenmodul 10 mitsamt der Einteilerleiste 13 im Bereich der Serviceöffnung 30 befindet.

In dieser Position kann bspw. ein Verriegelungsmittel gelöst und die Einteilerleiste 13 über die Serviceöffnung 30 seitlich aus dem Profilelement 11 herausgezogen werden. Vorzugsweise ist eine Verriegelung des Austauschelements 43 am Profilelement 41 (vgl. hierzu Fig. 6) nur an einer Seite der Vorrichtung 1 vorgesehen. Das austauschbare 43 Element der Einteilerleiste 10, 13, 40 ist einseitig im Bereich der Serviceöffnung 30 von dem Profilelement 41 lösbar und kann einfach über die Serviceöffnung 30 aus der Handhabungsvorrichtung 1 entnommen werden. Im Anschluss daran wird eine neue Einteilerleiste 13 gemäß den Anforderungen der im Anschluss zu bearbeitenden Stückgüter in das Profilelement 11 innerhalb der Handhabungsvorrichtung 1 eingeschoben.

Alle für den Austausch der Einteilerleiste 13 notwendigen Schritte können an bzw. über die Serviceöffnung 30 an einer Seite der Handhabungsvorrichtung 1 ausgeführt werden. Somit ist es nicht mehr notwendig, dass der Bediener um die Handhabungsvorrichtung 1 herumlaufen muss, um ein weiteres Verriegelungsmittel bzw. Befestigungsmittel am gegenüberliegenden Ende des Einteilerleistenmoduls 10 zu lösen.

Unter der einseitigen Entnahme bzw. dem einseitigen Lösen ist zu verstehen, dass ein Bediener oder bei Automatisierung ein Roboter o.ä. beim Lösen und der Entnahme jedes Austauschelements 43 nicht an der gegenüberliegenden Seite der Handhabungsvorrichtung 1 tätig werden muss.

So sieht die Vorrichtung 1 gemäß der gezeigten Variante mindestens einen Zugangsbereich vor, der einer manuellen Handhabung der wenigstens einen werkzeuglos vom Profilabschnitt 11, 41 lösbaren Einteilerleiste 13, 43 und/oder einer Entnahme bzw. einem Austausch gegen eine weitere Einteilerleiste 13, 43 (vgl. Figuren 2A bis 3B; vgl. zum Aufbau die Fig. 6) dient. Wie erwähnt, kann dieser mindestens eine Zugangsbereich durch die Serviceöffnung 30 gebildet sein oder mit einer Serviceöffnung 30 ausgestattet sein, so dass die Einteilerleiste 10, 13, 40, 43 nach ihrer Trennung vom Profilabschnitt 11, 41 einseitig über den Zugangsbereich bzw. über die Serviceöffnung 30 entnehmbar ist. Die Vorrichtung 1 kann wahlweise wenigstens eine Wechselposition für die mindestens eine Einteilerleiste 10, 13, 40, 43 aufweisen, an der ein Austausch der Einteilerleiste 13, 43 unter Trennung vom Profilabschnitt 11, 41 vornehmbar ist, wobei die Wechselposition insbesondere mit dem Zugangsbereich bzw. mit der Serviceöffnung 30 korrespondieren und/oder diesem/dieser zugeordnet sein kann.

Wie erwähnt, können der Profilabschnitt 11, 41 und die Einteilerleiste 13, 43 an ihrem jeweils der Serviceöffnung 30 zugewandten Ende über ein oder mehrere Befestigungsmittel lösbar miteinander verbunden sein. Besonders bevorzugt hierbei ist, dass das ein oder mehrere Befestigungsmittel gut über die Serviceöffnung 30 erreichbar sind.

Um das Austauschelement 43 der Einteilerleiste 10, 13, 40 schnell und einfach an ein neues Produktformat anzupassen, ist ein sogenannter Wechselmodus vorgesehen, bei dem die Einteilerleiste 10, 13, 40 innerhalb der Handhabungsvorrichtung 1 in einer Wechselposition angeordnet ist. Insbesondere ist die Wechselposition der Serviceöffnung 30 zugeordnet, so dass der Austausch über die Serviceöffnung 30 stattfinden kann. Besonders bevorzugt ist vorgesehen, dass im Wechselmodus die Serviceöffnung 30 in einer Flucht zur Längsachse der in der Wechselposition angeordneten Einteilerleiste 10, 13, 40 angeordnet ist.

Nachdem das mindestens eine Befestigungsmittel 21 an dem der Serviceöffnung 30 (vgl. Fig. 4A, Fig. 4B) zugewandten Ende der Einteilerleiste 10 gelöst worden ist (vgl. Fig. 2A, Fig. 2B und Fig. 3A), kann der austauschbare Abschnitt 13, 43 der Einteilerleiste 10, 13, 40 nunmehr einseitig über die Serviceöffnung 30 bzw. über den Zugangsbereich entnommen werden. Insbesondere wird das Austauschelement 13, 43 über die Serviceöffnung 30 aus dem Profilelement 11, 41 bzw. dem Profilabschnitt 11, 41 entnommen bzw. herausgezogen (vgl. Figuren 2A bis 3B, Fig. 6). Anschließend wird ein anderes Austauschelement 13, 43 mit für das neue Produkt angepasster Anordnung der Einteilerfinger 6, 14 über die Serviceöffnung 30 in das Profilelement 11, 41 eingeführt bzw. eingeschoben. Nachdem das Austauschelement 13, 43 über das mindestens eine Befestigungsmittel 21 im Bereich der Serviceöffnung 30 am Profilelement 13, 43 fixiert ist, kann mit der neuen Produktion gestartet werden.

In der Fig. 4A ist weiterhin ein Magazin 60 für mehrere Einteilerleisten 13 angedeutet, das im Bereich der Serviceöffnung 30 angeordnet ist. Bspw. kann das Magazin 60 horizontal- und/oder vertikalbeweglich ausgebildet sein, so dass es im laufenden Produktionsbetrieb nicht die Serviceöffnung 30 bedeckt, sondern nur im Wechselbetrieb direkt an der Serviceöffnung 30 angeordnet ist.

Bei einem durch einen Produktwechsel bedingten Formatwechsel kann die Entnahme von Einteilerleisten 13 aus der Handhabungsvorrichtung 1, die Entnahme von Einteilerleisten 13* aus dem Magazin 60 und der Austausch der Einteilerleisten 13, 13* an den Profilelementen 11 der Einteilerleistenmodule 10 der Handhabungsvorrichtung 1 automatisiert durch einen Roboter, ein Revolver- Magazin, ein Paternoster- Magazin ö.ä., insbesondere über die Serviceöffnung 30, erfolgen.

Während die Figuren 4A und 4B nur eine Einteilerleiste 13 zeigen, weist die Handhabungsvorrichtung 1 in der Praxis eine Mehrzahl von Einteilerleisten 7, 13 auf, die auf der definierten Bewegungsbahn für die Einteilerleisten 7, 13 entsprechend beabstandet angeordnet sind (vgl. hierzu Figuren 1A und 1B). Um sie auszutauschen, werden die Einteilerleisten 7, 13 nacheinander jeweils in die Wechselposition gebracht und das austauschbare Element 13, 43 wird jeweils entsprechend ausgetauscht. Der Austausch wird somit sinnvollerweise sequentiell vorgenommen, wobei alle Arbeitsschritte im Bereich bzw. über die Serviceöffnung 30 erfolgen. Zudem weisen die Einteilerleisten 7, 13 jeweils Längsachsen auf, die sich unterhalb der Transportebene für die Stückgüter 2, und quer zur Transportrichtung TR der Stückgüter 2 erstrecken. Wenn sich die Einteilerleiste 7, 13 jeweils in der Wechselposition befindet, ist die Serviceöffnung 30 vorzugsweise in einer Flucht zur Längsachse der Einteilerleiste 7, 13 angeordnet.

Die Fig. 6 zeigt einen Querschnitt durch eine zweite Ausführungsform eines Einteilerleistemoduls 40 mit einem Einteilfinger 46. Das Einteilerleistenmodul 40 umfasst ein Profilelement 41 mit einem C-förmigen Querschnitt und einer durchgehende Längsöffnung 42 parallel zur Längsachse des Profilelementes 41.

Weiterhin umfasst das Einteilerleistenmodul 40 eine vom Profilelement 41 lösbare Einteilerleiste 43 mit einem Innenbereich 44. Der Innenbereich 44 der Einteilerleiste 43 weist ein Außenprofil auf, das zumindest bereichsweise im Wesentlichen das Innenprofil des Profilelementes 41 nachbildet, so dass die Einteilerleiste 43 seitlich in eine durch das Innenprofil des Profilelementes 41 gebildete Aufnahme eingeschoben werden kann.

Die austauschbare Einteilerleiste 43 weist einen weiteren Außenbereich 45 auf, der nach Einschieben der Einteilerleiste 43 in das Profilelement 41 über die Längsöffnung 42 hinaus aus dem Profilelement 41 heraus ragt.

Zwischen dem Innenbereich 44 und dem Außenbereich 45 ist ein Übertrittsbereich 47 angeordnet. Der Übertrittsbereich 47 stellt insbesondere den Bereich der Einteilerleiste 43 dar, der sich im montierten Zustand des Einteilerleistenmoduls 40, d.h. wenn die Einteilerleiste 43 im Profilelement 41 angeordnet ist, insbesondere in die Aufnahme des Profilelementes 41 eingeschoben ist, durch die Längsöffnung 42 des Profilelementes 41 erstreckt.

Der mindestens eine Einteilfinger 46 ist am Außenbereich 45 der austauschbaren Einteilerleiste 43 angeordnet und steht zumindest weitgehend senkrecht auf den Längsachsen des Profilelementes 41 und der Einteilerleiste 43. Der Einteilfinger 46 kann lösbar oder nicht lösbar an der Einteilerleiste 43 befestigt sein.

Wie es die Fig. 6 verdeutlicht, können die Einteilerleisten 43 durch Relativbewegungen zum Profilabschnitt 41 unter Aufhebung des Form- und/oder Kraftschlusses aus dem form- und/oder kraftschlüssigen Kontakt mit dem wenigstens einen Profilabschnitt 41 gebracht und von diesem getrennt werden. Hierbei wird die jeweilige Einteilerleiste 43 durch Verschieben entlang ihrer Längserstreckungsrichtung aus dem form- und/oder kraftschlüssigen Kontakt mit dem jeweiligen Profilabschnitt 41 gebracht und von diesem getrennt. Darüber hinaus kann gemäß einer weiteren alternativen oder ergänzenden Variante vorgesehen sein, dass die jeweilige Einteilerleiste 43 in ihrer Betriebslage zur Fixierung einer definierten Einbauposition magnetisch und/oder mechanisch mit dem wenigstens einen Profilabschnitt 41 verrastet ist.

Alle diese Varianten erlauben einen schnellen, einfachen und weitgehend werkzeuglos durchführbaren Austausch der Einteilerleisten 43 an der erfindungsgemäßen Vorrichtung 1 (Fig. 1A, Fig. 1B), wodurch Produktwechsel weitaus schneller durchführbar sind als bei den bisher bekannten Vorrichtungen.

Die Fig. 7 zeigt eine weitere Ausführungsform einer austauschbaren Einteilerleiste 50 eines Einteilerleistenmoduls. In diesem Ausführungsbeispiel sind die Einteilfinger 51 werkzeugfrei lösbar an der Einteilerleiste 50 befestigt und können innerhalb eines vorgegebenen Rastmusters variabel an der Einteilerleiste 50 angeordnet werden. Hierfür weist die Einteilerleiste 50 Rasteinrichtungen 55 und die Einteilfinger 51 weisen korrespondierende Rastmittel 56 auf. Zwischen den Rasteinrichtungen 55 der Einteilerleiste 50 und dem Rastmittel 56 des Einteilfingers 51 kann eine insbesondere werkzeugfrei lösbare Rastverbindung hergestellt werden, so dass die Einteilerleiste 50 für mehrere Produkt- Formate verwendet werden kann.

Die Einstellung der Einteilfinger 51 an den austauschbaren Einteilerleisten 50 könnte bspw. zeitlich parallel zu einer Einstellung der Transportspuren für die Artikel 2 erfolgen. Insbesondere könnte eine mechanische Kopplung zwischen den die Artikelspuren trennenden Gassenblechen und/oder den Transportspuren für die Artikel 2 mit den Einteilfingern 51 vorgesehen sein. Insbesondere kann vorgesehen sein, dass bei einer Verstellung der Gassenbleche und/oder bei der Verstellung der Transportspuren für die Artikel 2 mit den zugehörigen Transportbändern, insbesondere Förderbändern o.ä. insbesondere bei einer Verstellung der Gassenbleche oder Transportspuren in horizontaler Richtung senkrecht zur Transportrichtung TR, die Einteilfinger 51 entsprechend mitgenommen werden.

Die Handhabungsvorrichtung 1 kann eine hier nicht näher dargestellte Steuereinheit umfassen, welche die Bewegungen der Einteilerleisten 7, 13 ansteuert. Insbesondere kann durch die Steuereinheit die Bewegungsbahn jeder Einteilerleiste 7, 13 angesteuert werden, um die Einteilerleiste 7, 13 kontrolliert in die Wechselposition benachbart zur Serviceöffnung 30 bzw. zum Zugangsbereich zu bringen. So kann es sich hierbei bspw. um die Gesamtsteuerung der Handhabungsvorrichtung 1 handeln. Über die Steuereinheit kann insbesondere der Produktionsbetrieb der Handhabungsvorrichtung 1 geregelt werden. Weiterhin kann die Einteilerleiste 7, 13 über die Steuereinheit in die Wechselposition gefahren werden, so dass der Austausch des Austauschelementes 13, 43 erfolgen kann.

Da die Handhabungsvorrichtung 1 eine Mehrzahl von Einteilerleisten 7, 13 umfasst, deren Austauschelemente 13, 43 bspw. bei einem Produktwechsel jeweils ausgetauscht werden müssen, werden die Einteilerleisten 7, 13 sinnvollerweise nacheinander jeweils in die Wechselposition gebracht. Wird der Austausch durch eine Bedienperson vorgenommen, so können unterschiedliche Sicherheitsmechanismen vorgesehen sein, die sicherstellen, dass eine Einteilerleiste 7, 13 erst dann aus der Wechselposition herausgefahren werden kann, wenn der Austausch komplett ist. So kann bspw. vorgesehen sein, dass der Bediener über eine Kontrolleinheit bestimmte Arbeitsschritte quittieren muss, damit die Einteilerleiste 7, 13 über die Bewegungsbahn weitergefahren wird und die nächste Einteilerleiste 7, 13 in die Wechselposition gelangen kann.

Der Bediener darf insbesondere erst die Weiterschaltbedingung für den nächsten Einteilereinschub erhalten, wenn bestimmte Voraussetzungen erfüllt sind. Hierfür kann ein mindestens eine Erkennungseinrichtung, insbesondere ein Sensor, vorgesehen sein, über welche(n) eine Belegung der Profilelemente 11, 41 geprüft werden kann. Bspw. kann ein Endschalter an jedem Profilelement 11, 41 mitgeführt werden, welcher ein Signal an eine Steuereinheit übermittelt, dass ein Austauschelement 13, 43 vorhanden ist. Insbesondere kann hierfür ein JA/NEIN-Mechanismus vorgesehen sein. Ein JA-Signal gibt an, dass ein Austauschelement 13, 43 korrekt am Profilelement 11, 41 bzw. Aufnahmeelement angeordnet ist. Ein Nein-Signal wird ausgegeben, so lange kein Austauschelement 13, 43 am Profilelement 11, 41 bzw. Aufnahmeelement angeordnet ist bzw. wenn sich das Austauschelement 13, 43 nicht in der korrekten Position befindet, weil es bspw. noch nicht vollständig eingeschoben worden ist.

Um zusätzlich sicherzustellen, dass das richtige Austauschelement 13, 43 bzw. die richtige Einteilerleiste 7, 13 eingebaut wurde, kann dies bspw. mit einer an die Steuereinheit gekoppelten Kamera überwacht werden. Alternativ könnte an die Steuereinheit gekoppeltes ein RFID-Auslesegerät Verwendung finden, welches in der Nähe der Handhabungsvorrichtung 1 und insbesondere in der Nähe der Wechselposition angeordnet ist und mit welchem auf den Einteilerleisten 7, 13 angeordnete RFID-Tags ausgelesen werden können.

Wahlweise kann vorgesehen sein, dass die Profilelemente 11, 41 bzw. Profilabschnitte inklusive der austauschbaren Einteilerleisten 13, 43 mit den Einteilfingern 6, 14 in eine Wechselposition bzw. Serviceposition abgesenkt werden können. So kann bspw. vorgesehen sein, dass das Fördermittel, das die Bewegungsbahn der Einteilerleiste 7, 13 vorgibt, relativ zur Transportebene 5 der Artikel 2 in die Wechselposition bzw. Serviceposition absenkbar ist. Auf diese Weise können die Austauschelemente 13, 43 bzw. Einteilerleisten 7, 13 seitlich, also quer zur Transportrichtung TR, aus den Profilelementen 11, 41 bzw. Aufnahmeelementen bzw. Profilabschnitten herausgezogen werden, ohne dass die Einteilfinger 6, 14 mit den Transportmitteln 4 bzw. der Transportebene 5 für die Artikel 2 kollidieren, zwischen welchen zumindest ein Teil der Einteilfinger 6, 14 im Betriebsmodus zumindest zeitweise angeordnet sind.

Alternativ kann ein Abstand zwischen zwei Einteilerleisten 7, 13 bzw. zwei Profilelementen 11, 41 einstellbar sein, so dass im Falle eines Formatwechsels alle austauschbaren Einteilerleisten 7, 13 und Profilabschnitte 11, 41 zeitgleich unterhalb der Transportebene 5 positioniert werden können. In diesem Fall ist ebenfalls sichergestellt, dass keine Einteilfinger 6, 14 oberhalb des Transportmittels 4 für die Artikel 2 aus der Transportebene 5 herausragen.

Insbesondere wenn die Handhabungsvorrichtung 1 eine Mehrzahl von Einteilerleisten 7, 13 umfasst, kann vorgesehen sein, dass die Steuereinheit das sequentielle Anfahren der Wechselposition durch die Einteilerleisten 7, 13 steuert. Hier kann als zusätzlicher Kontrollmechanismus bspw. ein Kontaktschalter o.ä. vorgesehen sein, der bei korrekter Fixierung bzw. Befestigung der austauschbaren Einteilerleiste 13, 43 am Profilelement 11, 41 bzw. Profilabschnitt aktiviert wird. Erst wenn durch den Kontaktschalter o.ä. die Information gegeben wird, dass das Austauschelement 13, 43 bzw. die austauschbare Einteilerleiste korrekt am Profilelement bzw. am Profilabschnitt 11, 41 angeordnet ist, kann die in der Wechselposition angeordnete Einteilerleiste 7, 13 aus dieser herausgefahren werden und die nachfolgende Einteilerleiste 7, 13 kann nunmehr die Wechselposition einnehmen. Weitere dem Fachmann bekannte Kontrollmechanismen können ebenfalls vorteilhaft eingesetzt werden.

Eine Gruppiervorrichtung bzw. erfindungsgemäße Handhabungsvorrichtung 1 umfasst somit insbesondere ein dauerhaft innerhalb der Handhabungsvorrichtung 1 angeordnetes und befestigtes Profilelement 11, 41 und ein gemäß den Anforderungen, insbesondere gemäß den bearbeiteten Produkten 2, angepasstes Austauschelement 13, 43 bzw. eine austauschbare Einteilerleiste 7, 13, das/die leicht und möglichst werkzeuglos vom Profilelement 11, 41 lösbar ist und bei einem Produktwechsel schnell und einfach an einer Seite der Handhabungsvorrichtung 1 ausgetauscht werden kann. Da die Befestigung 21 zwischen dem Profilelement 11, 41 und der austauschbaren Einteilerleiste 13, 43 einseitig lösbar ist, ist der Wechsel deutlich vereinfacht, da der Bediener nunmehr nicht mehr nicht mehr zusätzlich eine zweite Befestigung einer Einteilerleiste auf der anderen Seite der Handhabungsvorrichtung 1 lösen muss. Zudem ist es dadurch möglich, wie weiter unten beschrieben, das Lösen und Auswechseln des Austauschelementes 13, 43 der Einteilerleiste 7, 13 mit dem mindestens einen Einteilfinger 6, 14 zu automatisieren.

Der Profilabschnitt 11, 41 und die austauschbare Einteilerleiste 13, 43 weisen jeweils eine Längsachse auf. Insbesondere sind die Längsachsen im verbauten Zustand, d.h. wenn die austauschbare Einteilerleiste 13, 43 funktionell am Profilelement bzw. Profilabschnitt 11, 41 angeordnet ist, parallel oder koaxial zueinander ausgerichtet angeordnet.

Wie es die Figuren 2A bis 3B und die Fig. 6 erkennen lassen, hat das Profilelement 11, 41 bzw. der Profilabschnitt parallel oder koaxial zu seiner Längsachse eine Aufnahme 15 für das Austauschelement 13, 43 bzw. für die austauschbare Einteilerleiste ausgebildet. Es kann vorzugsweise vorgesehen sein, dass mindestens eine der senkrecht zur Längsachse des Profilelementes 11, 41 bzw. -abschnittes ausgebildeten Seitenflächen 16 des Profilelementes 11, 41 bzw. Profilabschnittes eine Aufnahmeöffnung 15 für die austauschbare Einteilerleiste 13, 43 aufweist, über welche die austauschbare Einteilerleiste 13, 43 in axialer Richtung in die Aufnahme 15 des Profilelementes 11, 41 einschiebbar oder aufschiebbar ist. Auf diese Weise ist das Austauschelement 13, 43 somit schnell und einfach gegenüber dem Profilelement 11, 41 austauschbar. Wahlweise können hierbei Rastverbinden, magnetische Verbindung o. dgl. diese Positionierung unterstützen bzw. die exakte Positionierung definieren.

Wahlweise ist das Profilelement 11, 41 ein Hohlrohr aus einem Metall wie Aluminium oder einem anderen geeigneten Material, das über seine gesamte Länge eine durchgehende Längsöffnung 42 parallel zur Längsachse aufweist (vgl. Fig. 6). Das Austauschelement 13, 43 bzw. die austauschbare Einteilerleiste 7, 13 kann bspw. durch ein Vollprofil oder Hohlprofil gebildet sein. Der Außenumfang des Austauschelements 13, 43 bzw. der austauschbaren Einteilerleiste 7, 13 ist zumindest geringfügig geringer als der Innenquerschnitt des Profilelementes 11, 41, so dass das Austauschelement 13, 43 über die offenen Seitenflächen des Profilelementes 11, 41 mit Spiel senkrecht zur Längsachse des Profilelementes 11, 41 in dieses eingeschoben werden kann. Die Einteilfinger 6, 14, 46 sind in einer Flucht parallel zur Längsachse der austauschbaren Einteilerleiste 13, 43 an dieser angeordnet und weisen bspw. eine dritte Breite auf, die geringer ist als eine erste Breite der durchgehenden Längsöffnung 42 des Profilelementes 13, 43. Die austauschbare Einteilerleiste 13, 43 wird derart in das Profilelement 11, 41 bzw. in den Profilabschnitt eingeschoben, dass die Einteilfinger 6, 14, 46 durch die durchgehende Längsöffnung 42 des Profilelementes 11, 41 nach außen weisen (Fig. 6).

Gemäß den in Fig. 6 sowie den in Fig. 2A und Fig. 2B und/oder den in Fig. 3A und Fig. 3B gezeigten Ausführungsbeispielen kann vorgesehen sein, dass der Profilabschnitt 11, 41 durch ein Profilrohr bzw. eine Montageschiene mit einer Längsachse gebildet ist, die einen C- förmigen Querschnitt aufweist. Das Profilrohr 11, 41 bzw. die Montageschiene weisen eine durchgehende Längsöffnung 42 parallel zur Längsachse auf, die eine geringere Breite als die Seitenhöhe, innerhalb derer die Längsöffnung 42 ausgebildet ist, einnimmt. So weist das Profilrohr 11, 41 bzw. die Montageschiene bspw. eine integrierte Nut 19 parallel zur Längsachse auf (vgl. hierzu Fig. 2A und Fig. 2B). Die Nut 19 kann weiterhin einen Hinterschnitt 20 aufweisen. Vorzugsweise weist die austauschbare Einteilerleiste 13, 43 ein Außenprofil auf, das zumindest bereichsweise im Wesentlichen das Innenprofil des Profilelementes 11, 41 nachbildet, wobei jedoch zwischen dem Außenprofil der austauschbaren Einteilerleiste 13, 43 bzw. des Austauschelementes und dem Innenprofil des Profilelementes 11, 41 ein gewisses Spiel ausgebildet sein sollte, damit das Austauschelement 13, 43 bzw. die austauschbare Einteilerleiste schnell und einfach in das Profilelement 11, 41 eingeschoben werden kann.

Der mindestens eine Einteilfinger 6, 14, 46 ist derart am Austauschelement 13, 43 bzw. an der austauschbaren Einteilerleiste angeordnet, dass er durch die Längsöffnung 19, 42 des Profilelementes 11, 41 bzw. des Profilabschnittes aus diesem/dieser herausragt. Bei dieser Ausführungsform weist der mindestens eine an der austauschbaren Einteilerleiste 13, 43 angeordnete Einteilfinger 6, 14, 46 eine dritte Breite auf, die geringer ist als eine erste Breite der durchgängigen Längsöffnung 19, 42 der Aufnahme 15.

Alternativ ist die austauschbare Einteilerleiste 13, 43 derart ausgebildet, dass sie einen ersten Einschubbereich bzw. Innenbereich 44 aufweist, der korrespondierend zum Innenprofil des Profilelementes ausgebildet ist und seitlich in das Profilelement 11, 41 eingeschoben werden kann. Die Einteilfinger 6, 14, 46 sind an einem weiteren Außenbereich 45 der austauschbaren Einteilerleiste 13, 43 angeordnet und können ggf. eine dritte Breite aufweisen, die größer als eine erste Breite der durchgängigen Längsöffnung 42 der Aufnahme sein kann (vgl. hierzu die Fig. 6).

Die austauschbare Einteilerleiste 13, 43 kann eine zweite Breite aufweisen, die größer ist als eine erste Breite der durchgängigen Längsöffnung 42 der Aufnahme 15. Bspw. weist der Einschubbereich zumindest eine zweite Breite auf, die größer ist als eine erste Breite der durchgehenden Längsöffnung 42 des Profilelementes 11, 41. Dadurch wird gewährleistet, dass der Einschubbereich der austauschbaren Einteilerleiste 13, 43 innerhalb des Profilelementes 11, 41 verbleibt und nicht über die Längsöffnung 42 herausfallen kann. Weiterhin weist die austauschbare Einteilerleiste 13, 43 einen schmalen Übertritts- oder Übergangsbereich auf, der eine Breite aufweist, die geringer ist als die erste Breite der durchgehenden Längsöffnung 42 des Profilelementes 11, 41. Zudem weist die austauschbare Einteilerleiste 13, 43 zumindest einen sog. Außenbereich 45 auf, der im am Profilelement 11, 41 montierten Zustand außerhalb des Profilelementes 11, 41 angeordnet ist. Dieser Außenbereich 45 weist vorzugsweise ebenfalls eine Breite auf, die größer ist als die erste Breite der durchgehenden Längsöffnung 42 des Profilelementes 11, 41. An dem Außenbereich 45 sind insbesondere die Einteilfinger 6, 14, 46 angeordnet. An einer derartig ausgebildeten austauschbaren Einteilerleiste 13, 43 können insbesondere lösbar montierte Einteilfinger 6, 14, 46 angeordnet sein, die je nach Anforderungen der zu gruppierenden Stückgüter 2 in unterschiedlichen Positionen an der austauschbaren Einteilerleiste 13, 43 angeordnet werden können.

Der mindestens eine Einteilfinger 6, 14, 46 ist weitgehend senkrecht zur Längsachse des Profilelementes 11, 41 und der austauschbaren Einteilerleiste 13, 43 und/oder der durchgängigen Längsöffnung 42 des Profilelementes 11, 41 bzw. des Profilabschnittes angeordnet.

Um ihren Zweck in gewünschter Weise zu erfüllen, sind die Einteilfinger 6, 14, 46 in alle Richtungen stabil. Die Einteilfinger 6, 14, 46 an den gegen zuvor entnommene Einteilerleisten 7, 13 ausgetauschten Einteilerleisten 7, 13 sind vorzugsweise derart konstruiert, dass sie nur in Überschubrichtung des Produkts 2 eine maximale Kraftwirkung entfalten. Eine seitliche Krafteinwirkung kann aufgrund der definierten Laufrichtung des Produkts 2 nahezu ausgeschlossen werden. Hierzu sind die Einteilfinger 6, 14, 46 insbesondere seitlich mit Nutensteinen in einer Nut in dem Austauschelement 13, 43 befestigt, wobei ein Formschluss zwischen den Einteilfingern 6, 14, 46 und der austauschbaren Einteilerleiste 13, 43 durch die Nut 19 selbst in Transportrichtung TR der Artikel 2 gegeben ist. Quer zur Transportrichtung TR der Artikel 2 ist der Formschluss durch den klemmbaren Nutenstein gegeben. Alternativ oder zusätzlich kann der Einteilfinger 6, 14, 46 im Querschnitt (horizontal bei vertikal stehendem Einteilfinger durchgeschnitten) zumindest bereichsweise ein Profil aufweisen, welches nicht kreisförmig ist und wobei mehr Material entlang einer Achse in Transportrichtung TR vorgesehen ist, insbesondere wobei mehr Material quer zur Transportrichtung TR vorgesehen ist.

Wie bereits unter Bezugnahme auf die Figuren 2A bis 3B beschrieben wurde, ist an dem zur Serviceöffnung 30 hinweisenden Ende der Einteilerleiste 13, 43 mindestens ein Befestigungsmittel 21, 22 vorgesehen, das gelöst werden muss, damit der austauschbare Abschnitt 13, 43 von dem Profilelement 11, 41 getrennt werden kann, insbesondere damit das Austauschelement 13, 43 parallel zur Längsachse der Einteilerleiste 7, 13 aus dem Profilelement 11, 41 herausgezogen werden kann.

Die Befestigungsmittel 21, 22 dienen der ortsfesten Fixierung der austauschbaren Einteilerleiste 13, 43 am Profilelement 11, 41 im laufenden Produktionsbetrieb. So wird durch die Befestigungsmittel 21, 22 eine seitliche Bewegung der austauschbaren Einteilerleiste 13, 43 im laufenden Produktionsbetrieb unterbunden, insbesondere eine Relativbewegung zwischen der austauschbaren Einteilerleiste 13, 43 und dem Profilelement 11, 41 koaxial oder parallel zu deren Längsachsen. Zudem wird durch das Befestigungsmittel 21, 22 die Position der austauschbaren Einteilerleiste 13, 43 und somit die Position des mindestens einen Einteilfingers 6, 14, 46 am Profilelement 11, 41 festgelegt.

Als Befestigungsmittel 21, 22 finden vorzugsweise Mittel zur werkzeuglosen Verriegelung Anwendung, insbesondere Verschraubungen oder Schnellverschlusssysteme. Besonders bevorzugt können diese Schnellverschlusssysteme einhändig bedient werden. Es kann sich hierbei um Verriegelung auf mechanischem Wege, elektromechanisch, elektrisch, pneumatisch, hydraulisch oder durch Software handeln. Es ist also insbesondere möglich, eine elektrische gesteuerte Verriegelung eines Riegels über die Steuerungseinheit der Handhabungsvorrichtung 1 zu bewirken. Oder aber es handelt sich um eine einfache mechanische Verriegelung in Form eines Riegels oder ähnlichem, der eine seitliche Bewegung des Austauschelementes 13, 43 verhindert und der durch den Benutzer vorzugsweise einfach, schnell und/oder werkzeuglos gelöst bzw. gesichert werden kann. Auch magnetische oder mechanisch rastende Verbindungen, ggf. elektromagnetisch entrastbar bzw. lösbar, kommen für die Positionierung der Einteilerleisten 13, 43 in den Profilabschnitten 11, 41 in Frage.

Wie weiter oben bereits beschrieben, kann mit der korrekten Befestigung des Befestigungsmittels 21, 22 an der Einteilerleiste 13, 43 ein Kontrollmechanismus gekoppelt sein, der verhindert, dass die Einteilerleiste 13, 43 die Wechselposition verlassen kann, solange sie nicht korrekt am Profilelement 11, 41 positioniert ist. Dadurch können Fehleinbaupositionen wirksam verhindert werden.

Vorzugsweise ist vorgesehen, dass das Profilelement 11, 41 an dem gegenüberliegenden Ende der Einteilerleiste 7, 13 bspw. eine verschlossene Seitenfläche aufweist, so dass das Einschieben der austauschbaren Einteilerleiste 13, 43 in das Profilelement 11, 41 durch die verschlossene Seitenfläche räumlich begrenzt ist. In diesem Zusammenhang könnte alternativ ein Einrastmechanismus o.ä.in einem dem Befestigungsmittel 21, 22 gegenüberliegenden Endbereich vorgesehen sein, der den Endbereich der austauschbaren Einteilerleiste 13, 43 an den Endbereich des Profilelementes 11, 41 leicht lösbar fixiert. Dies könnte bspw. durch eine Art Zwangsführung der austauschbaren Einteilerleiste 13, 43 in dem Profilelement 11, 41 erreicht werden. Diese leicht lösbare Fixierung bzw. Zwangsführung o.ä. muss insbesondere auf Zug lösbar sein und sich beim Herausziehen der austauschbaren Einteilerleiste 13, 43 über die Serviceöffnung 30 selbständig lösen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1: Handhabungsvorrichtung, Vorrichtung, Vorrichtung zum Gruppieren von Stückgut
- 2: Stückgut
- 2a: Stückgutstrom
- 2b, 2c: Stückgutgruppe
- 2d: Stückgutgruppe
- 2_{L}: letztes Stückgut einer Stückgutgruppe
- 2_{V}: vorauseilendes Stückgut
- 3: Getränkebehälter
- 4: Transportmittel, Transportabschnitt
- 5: Transportebene
- 6: Einteilfinger
- 6a, 6b: Einteilfinger
- 7: Einteilerleiste
- 7a, 7b: Einteilerleiste
- 8: Kragarm
- 9: Kreuztisch
- 10: Einteilerleistenmodul, Modul
- 11: Profilelement, Profilabschnitt
- 12: Befestigungsmittel
- 13, 13*: Einteilerleiste, Einschubleiste, austauschbare Einteilerleiste, Austauschelement
- 14: Einteilfinger
- 15: Aufnahme
- 16: seitlicher Bereich
- 17: Positionierung- und / oder Verriegelungseinheiten
- 18: Befestigungsmittel
- 19: Nut
- 20: Hinterschnitt
- 21: Befestigungsmittel
- 22: Schraubmittel
- 25: Umlenkrolle
- 30: Serviceöffnung
- 40: Einteilerleistenmodul, Modul
- 41: Profilelement, Profilabschnitt
- 42: Längsöffnung
- 43: Einteilerleiste, Einschubleiste, austauschbare Einteilerleiste, Austauschelement
- 44: Innenbereich
- 45: Außenbereich
- 46: Einteilfinger
- 47: Übertrittsbereich
- 50: Einteilerleiste, Einschubleiste, austauschbare Einteilerleiste, Austauschelement
- 51: Einteilfinger
- 55: Rasteinrichtung
- 56: Rastmittel
- 60: Magazin

- L: Längsachse, Längserstreckungsrichtung
- TR: Transportrichtung, Förderrichtung

## Patentansprüche

1. Vorrichtung (1) zum Gruppieren von Stückgut (2), das in einem im Wesentlichen geschlossenen Strom (2a) auf einem Transportabschnitt (4) entlang einer Transportebene (5) zugeführt und durch mindestens einen von unten quer zur Transportebene (5) in den Strom (2a) eintauchenden Einteilfinger (14, 46, 51) längs zur Transportrichtung (TR) gruppiert wird, welcher mindestens eine Einteilfinger (14, 46, 51) mit einer sich quer zur Transportrichtung (TR) und unterhalb dieser erstreckenden Einteilerleiste (7, 13, 13*, 43, 50) verbunden ist, die beidseitig der Transportebene (5) an Fördermitteln verankert und dort an wenigstens einem durchgängigen Profilabschnitt (11, 41) oder an zumindest die Endabschnitte der Einteilerleiste (7, 13, 13*, 43, 50) haltenden Profilabschnitten (11, 41) form- und/oder kraftschlüssig fixiert ist, **dadurch gekennzeichnet, dass** die Fixierung der Einteilerleiste (7, 13, 13*, 43, 50) am wenigstens einen Profilabschnitt (11, 41) werkzeuglos lösbar und in definierter Einbauposition wieder herstellbar ist und dass die Einteilerleiste (7, 13, 13*, 43, 50) durch Verschieben entlang ihrer Längserstreckungsrichtung (L) aus dem form- und/oder kraftschlüssigen Kontakt mit dem wenigstens einen Profilabschnitt (11, 41) bringbar und von diesem trennbar ist.

2. Vorrichtung nach Anspruch 1, bei der die Einteilerleiste (7, 13, 13*, 43, 50) in ihrer Betriebslage zur Fixierung einer definierten Einbauposition magnetisch und/oder mechanisch mit dem wenigstens einen Profilabschnitt (11, 41) verrastet ist.

3. Vorrichtung nach einem der Ansprüche 1 bis 2, die mit mindestens einem Zugangsbereich zur manuellen Handhabung der wenigstens einen werkzeuglos vom Profilabschnitt (11, 41) lösbaren Einteilerleiste (7, 13, 13*, 43, 50) und/oder zu deren Entnahme bzw. Austausch gegen eine weitere Einteilerleiste (7, 13, 13*, 43, 50) ausgestattet ist.

4. Vorrichtung nach Anspruche 3, die wenigstens eine Wechselposition für das mindestens eine Einteilerleistenmodul (10, 40) aufweist, an der ein Austausch der Einteilerleiste (7, 13, 13*, 43, 50) unter Trennung vom Profilabschnitt (11, 41) vornehmbar ist, wobei die Wechselposition insbesondere mit dem Zugangsbereich bzw. mit einer Serviceöffnung (30) korrespondiert und/oder diesem/dieser zugeordnet ist.

5. Verfahren zum Formatwechsel innerhalb einer Vorrichtung (1) zum Gruppieren von Stückgut (2) gemäß einem der Ansprüche 1 bis 4, wobei die Fixierung der Einteilerleiste (13, 13*, 43, 50) für einen durchzuführenden Formatwechsel vom wenigstens einen Profilabschnitt (11, 41) werkzeuglos gelöst wird, wobei die Einteilerleiste (7, 13, 13*, 43, 50) durch Verschieben entlang ihrer Längserstreckungsrichtung (L) aus dem form- und/oder kraftschlüssigen Kontakt mit dem wenigstens einen Profilabschnitt (11, 41) gebracht und von diesem getrennt wird, wobei die ursprünglich in der Vorrichtung (1) befindliche Einteilerleiste (7, 13, 13*, 43, 50) durch eine andere Einteilerleiste (7, 13, 13*, 43, 50) mit gegenüber der entnommenen Einteilerleiste (7, 13, 13*, 43, 50) anders positionierten und/oder anders zueinander beabstandeten Einteilfingern (14, 46, 51) unter Nutzung der definierten Einbauposition am Profilabschnitt (11, 41) ersetzt wird.

6. Verfahren nach Anspruch 5, bei dem die Einteilerleiste (7, 13, 13*, 43, 50) zur Durchführung eines Formatwechsels über mindestens einen Zugangsbereich bzw. eine Serviceöffnung (30) einseitig aus der Vorrichtung (1) entnommen und/oder gegen eine weitere Einteilerleiste (7, 13, 13*, 43, 50) ausgetauscht wird.

7. Verfahren nach einem der Ansprüche 5 bis 6, bei dem eine Steuereinheit der Vorrichtung (1) die Bewegungen des Profilabschnittes (11, 41) steuert und Positionierungen des Profilabschnittes (11, 41) entlang seiner Bewegungsbahn definiert, wobei die Einteilerleiste (7, 13, 13*, 43, 50) insbesondere durch die Steuereinheit kontrolliert in die Wechselposition benachbart zum Zugangsbereich bzw. zur Serviceöffnung (30) gebracht wird.

8. Verfahren nach einem der Ansprüche 5 bis 7, bei dem bei einem Formatwechsel der Austausch der austauschbaren Einteilerleisten (7, 13, 13*, 43, 50) an dem Profilelement (11, 41) über den Zugangsbereich der Vorrichtung bzw. über deren Serviceöffnung (30) automatisiert ist, wobei der Vorrichtung (1) insbesondere ein Magazin mit mehreren Einteilerleisten (7, 13, 13*, 43, 50) zugeordnet ist, wobei bei einem Formatwechsel die Entnahme der jeweiligen Einteilerleiste (7, 13, 13*, 43, 50) aus dem Profilabschnitt (11, 41) der Vorrichtung (1), die Entnahme einer neuen Einteilerleiste (7, 13, 13*, 43, 50) aus dem Magazin und der Austausch der Einteilerleisten (7, 13, 13*, 43, 50) an dem Profilabschnitt (11, 41) automatisiert sind.

## Claims

1. A device (1) for grouping piece goods (2), which are being fed on a transport section (4) along a transport plane (5) in a substantially continuous stream (2a), and which are grouped along the transport direction (TR) by at least one divider finger (14, 46, 51) being introduced transversely to the transport plane (5) from below into the stream (2a), the at least one divider finger (14, 46, 51) being connected to a divider bar (7,13, 13*, 43, 50) extending transversely to and below the transport direction (TR), which divider bar (7,13, 13*, 43, 50) is anchored on both sides of the transport plane (5) at conveying means and is form-lockingly and/or force-lockingly fixed there to at least one continuous profile section (11, 41) or to at least the profile sections (11, 41) holding the end sections of the divider bar (7,13, 13*, 43, 50), **characterized in that** the fixing of the divider bar (7,13, 13*, 43, 50) to the at least one profile section (11, 41) can be toollessly detached and restored in a specified installation position and **in that** the divider bar (7,13, 13*, 43, 50) canbe brought out of the form-locking and/or force-locking contact to the at least one profile section (11, 41) and separated therefrom by displacement along its longitudinal extension direction (L).

2. The device as recited in claim 1, in which the divider bar (7,13, 13*, 43, 50) in its operating position is magnetically and/or mechanically interlocked with the at least one profile section (11, 41) for the purpose of fixing a specified installation position.

3. The device as recited in one of the claims 1 to 2, which is provided with at least one access area for the purpose of manual handling of the at least one divider bar (7,13, 13*, 43, 50), which is toollessly detachable from the profile section (11, 41), and/or for the purpose of removing or, as the case may be, interchanging said divider bar (7,13, 13*, 43, 50) for another divider bar (7,13, 13*, 43, 50).

4. The device as recited in claim 3, which has at least one change position for the at least one divider bar module (10, 40), at which change position an interchange of the divider bar (7,13, 13*, 43, 50) is performable under separation from the profile section (11, 41), wherein the change position, in particular, corresponds with and/or is assigned to the access area or, as the case may be, corresponds with and/or is assigned to a service opening (30).

5. A method for format change within a device (1) for grouping piece goods (2) according to one of the claims 1 to 4, wherein the fixing of the divider bar (7,13, 13*, 43, 50) to the at least one profile section (11, 41) is toollessly detachable for the purpose of carrying out a format change, whereby the divider bar (7,13, 13*, 43, 50) is brought out of the form-locking and/or force-locking contact to the at least one profile section (11, 41) and is separated therefrom by displacement along its longitudinal extension direction (L), wherein the divider bar (7,13, 13*, 43, 50) originally located within the device (1) is interchanged for another divider bar (7,13, 13*, 43, 50) thereby using the specified installation position at the profile section (11, 41), which other divider bar (7,13, 13*, 43, 50) has divider fingers (14, 46, 51) that are positioned differently and/or spaced apart differently from the divider fingers (14, 46, 51) of the removed divider bar (7,13, 13*, 43, 50).

6. The method as recited in claim 5, in which for the purpose of carrying out a format change the divider bar (7,13, 13*, 43, 50) is removed on one side from the device (1) and/or is interchanged for another divider bar (7,13, 13*, 43, 50) by way of at least one access area or, as the case may be, by way of at least one service opening (30).

7. The method as recited in one of the claims 5 to 6, in which a control unit of the device (1) controls the movements of the profile section (11, 41) and specifies positioning of the profile section (11, 41) along its movement path, wherein the divider bar (7,13, 13*, 43, 50) is brought into the change position adjacent to the access area or, as the case may be, adjacent to the service opening (30) in a manner controlled, in particular, by the control unit.

8. The method as recited in one of the claims 5 to 7, in which the interchange of the interchangeable divider bars (7,13, 13*, 43, 50) at the profile element (11, 41) in a format change by way of the access area or, as the case may be, by way of the service opening (30) of the device (1), is automated, wherein, in particular, a magazine with a plurality of divider bars (7,13, 13*, 43, 50) is assigned to the device (1), wherein the removal of the respective divider bar (7,13, 13*, 43, 50) from the profile section (11, 41) of the device (1), the removal of a new divider bar (7,13, 13*, 43, 50) from the magazine, and the interchange of the divider bars (7,13, 13*, 43, 50) at the profile section (11, 41) in a format change are automated.

## Revendications

1. Dispositif (1) de groupement de produits de détail (2) qui sont amenés en un flux (2a) pour l'essentiel fermé sur une section de transport (4) le long d'un plan de transport (5) et qui sont groupés le long de la direction de transport (TR) par l'intermédiaire d'au moins un doigt à diviser (14, 46, 51) qui plonge d'en bas dans le flux (2a), transversalement au plan de transport (5), lequel au moins un doigt à diviser (14, 46, 51) est relié à une barre à diviser (7, 13, 13*, 43, 50) qui s'étend transversalement à la direction de transport (TR) et au-dessous de celle-ci et qui est ancrée des deux côtés du plan de transport (5) sur des moyens de transport et y est fixée à engagement positif et/ou par adhérence sur au moins un tronçon de profil (11, 41) continu ou sur des tronçons de profil (11, 41) maintenant au moins les tronçons d'extrémité de la barre à diviser (7, 13, 13*, 43, 50), **caractérisé par le fait que** la fixation de la barre à diviser (7, 13, 13*, 43, 50) sur ledit au moins un tronçon de profil (11, 41) peut être défaite sans outil et peut être réalisée à nouveau dans une position de montage définie et que la barre à diviser (7, 13, 13*, 43, 50) peut être mise hors contact à engagement positif et/ou par adhérence dudit au moins un tronçon de profil (11, 41) par déplacement le long de sa direction d'extension longitudinale (L) et peut être séparée de celui-ci.

2. Dispositif selon la revendication 1, dans lequel la barre à diviser (7, 13, 13*, 43, 50) est verrouillée magnétiquement et/ou mécaniquement avec ledit au moins un tronçon de profil (11, 41), dans sa position de fonctionnement pour fixer une position de montage définie.

3. Dispositif selon l'une quelconque des revendications 1 à 2, qui est équipé d'au moins une zone d'accès pour la manipulation manuelle de ladite au moins une barre à diviser (7, 13, 13*, 43, 50) détachable sans outil du tronçon de profil (11, 41) et/ou pour le retrait de celle-ci ou bien le remplacement de celle-ci par une autre barre à diviser (7, 13, 13*, 43, 50).

4. Dispositif selon la revendication 3, qui présente au moins une position de changement pour ledit au moins un module de barre à diviser (10, 40), où un échange de la barre à diviser (7, 13, 13*, 43, 50) peut être effectué en la séparant du tronçon de profil (11, 41), dans lequel la position de changement correspond en particulier à la zone d'accès ou bien à une ouverture de service (30) et/ou est associée à celle-ci.

5. Procédé de changement de format au sein d'un dispositif (1) de groupement de produits de détail (2) selon l'une quelconque des revendications 1 à 4, dans lequel la fixation de la barre à diviser (13, 13*, 43, 50) pour un changement de format à réaliser est défaite sans outil dudit au moins un tronçon de profil (11, 41), dans lequel la barre à diviser (7, 13, 13*, 43, 50) est mise hors contact à engagement positif et/ou par adhérence dudit au moins un tronçon de profil (11, 41) par déplacement le long de sa direction d'extension longitudinale (L) et est séparée de celui-ci, dans lequel la barre à diviser (7, 13, 13*, 43, 50) se trouvant à l'origine dans le dispositif (1) est remplacée par une autre barre à diviser (7, 13, 13*, 43, 50) ayant des doigts à diviser (14, 46, 51) qui, par rapport à la barre à diviser (7, 13, 13*, 43, 50) retirée, sont positionnés différemment et/ou sont espacés différemment l'un de l'autre, en utilisant la position de montage définie sur le tronçon de profil (11, 41).

6. Procédé selon la revendication 5, dans lequel, pour effectuer un changement de format, la barre à diviser (7, 13, 13*, 43, 50) est retirée d'un côté du dispositif (1) par au moins une zone d'accès ou bien une ouverture de service (30) et/ou est échangée contre une autre barre à diviser (7, 13, 13*, 43, 50).

7. Procédé selon l'une quelconque des revendications 5 à 6, dans lequel une unité de commande du dispositif (1) commande les déplacements du tronçon de profil (11, 41) et définit des positionnements du tronçon de profil (11, 41) le long de sa trajectoire de déplacement, dans lequel la barre à diviser (7, 13, 13*, 43, 50) est amenée de manière contrôlée en particulier par l'unité de commande en position de changement adjacente à la zone d'accès ou bien à l'ouverture de service (30).

8. Procédé selon l'une quelconque des revendications 5 à 7, dans lequel, dans le cas d'un changement de format, le remplacement des barres à diviser (7, 13, 13*, 43, 50) échangeables sur le tronçon de profil (11, 41) par la zone d'accès du dispositif ou bien par son ouverture de service (30) est automatisée, dans lequel au dispositif (1) est associé en particulier un magasin à plusieurs barres à diviser (7, 13, 13*, 43, 50), dans lequel, dans le cas d'un changement de format, le retrait de la barre à diviser (7, 13, 13*, 43, 50) respective du tronçon de profil (11, 41) du dispositif (1), le retrait d'une nouvelle barre à diviser (7, 13, 13*, 43, 50) du magasin et le remplacement des barres à diviser (7, 13, 13*, 43, 50) sur le tronçon de profil (11, 41) sont automatisés.
